# EUROPEAN PATENT SPECIFICATION

(11) **EP 4 380 238 B1**
(45) Date of publication and mention of the grant of the patent: **25.02.2026**
(21) Application number: 22851991.4
(22) Date of filing: 27.07.2022
(51) Int. Cl.: H04W 48/08, H04W 4/80, H04W 8/00, H04W 76/11, H04W 76/14, H04W 76/15

(54) **METHOD FOR DEVICE CONNECTION, ELECTRONIC DEVICES, AND SYSTEM**
VERFAHREN ZUR VORRICHTUNGSVERBINDUNG, ELEKTRONISCHE VORRICHTUNGEN UND SYSTEM
PROCÉDÉ DE CONNEXION DE DISPOSITIF, DISPOSITIFS ÉLECTRONIQUES ET SYSTÈME

(30) Priority: 02.08.2021 CN 202110878581
(43) Date of publication of application: 05.06.2024
(60) Divisional application: 26150475.7
(73) Proprietor: Huawei Technologies Co., Ltd., Shenzhen, Guangdong 518129 (CN)
(72) Inventor: SUN, Dongzhe, Shenzhen, Guangdong 518129 (CN); NI, Guanjun, Shenzhen, Guangdong 518129 (CN); ZHU, Xudong, Shenzhen, Guangdong 518129 (CN); LIAN, Hai, Shenzhen, Guangdong 518129 (CN); ZHANG, Jingyun, Shenzhen, Guangdong 518129 (CN); ZHAO, Yao, Shenzhen, Guangdong 518129 (CN); LI, Yumin, Shenzhen, Guangdong 518129 (CN); JIN, Meng, Shenzhen, Guangdong 518129 (CN)
(74) Representative: Gill Jennings & Every LLP
(86) International application number: PCT/CN2022/108173
(87) International publication number: WO 2023/011277

(56) References cited:
- EP-A1- 4 380 200
- CN-A- 103 813 479
- CN-A- 105 594 236
- CN-A- 108 111 999
- CN-A- 112 740 733
- CN-A- 112 789 873
- CN-A- 113 039 857
- CN-A- 113 170 377
- US-A1- 2014 188 348
- US-A1- 2014 351 446

## Description

### TECHNICAL FIELD

This application relates to short-range communication, and more specifically, to a device connection method in short-range communication.

### BACKGROUND

Short-range communication may implement communication between electronic devices with a small distance. Currently, mainstream access technologies in short-range communication include Wi-Fi, Bluetooth, ZigBee, and the like. With the development of the internet of things, new application scenarios such as smart vehicles, smart homes, smart terminals, and smart manufacturing occur, and a next-generation short-range access technology (for example, sparklink (sparklink)) emerges. However, how to implement a connection between devices is not specifically specified in the next-generation short-range access technology.

US 2014/351446 A1 discloses an apparatus and method for providing one or more protocols for one or more electronic devices. The method includes establishing, by an electronic device configured to provide a framework interface by executing instructions stored in a memory, one or more physical channels with an external electronic device, using one or more communication modules, executing, by the electronic device, two or more application programs to interface with the framework interface, and communicating, via the framework interface, data from the two or more application programs through the one or more physical channels to the external electronic device, using at least one logical channel or session for a respective one of the two or more application programs.

US 2014/188348 A1 discloses a passive entry passive start (PEPS) system for performing at least one PEPS function with respect to a vehicle as an end device (e.g., smart phone or key fob, etc.) approaches the vehicle and comes within range for authorization. The vehicle includes a plurality of sensors and a central module. The central module is communicatively coupled to the end device and to the sensors via short-range wireless connections. The central module can determine, based on signal strength information provided from the sensors or the end device, whether the end device is within range for authorization. When the end device is determined to be within range for authorization, the central module can control performance of at least one PEPS function at the vehicle

EP 4 380 200 A1 discloses a device discovery method and an apparatus, to support a plurality of access technologies, and meet diversified requirements for power consumption and bandwidths of different services or a same service in different communication scenarios.

### SUMMARY

This application provides a device connection method, an electronic device, and a system. For a next-generation short-range access technology, a controller and a basic service layer are configured in an electronic device. The controller, the basic service layer, and a peer device interact with each other, to establish a control channel in the electronic device, so as to implement a connection between electronic devices, and provide a basis for subsequent data transmission. In addition, in the short-range access technology provided in this application, final roles of two electronic devices may be determined based on expected roles of the two electronic devices, so that the roles of the two electronic devices can be flexibly changed based on an actual scenario, and communication flexibility is high.

According to a first aspect, a device connection method is provided, applied to a first electronic device. The first electronic device supports a short-range access technology and includes a basic service layer and a controller, and the method includes:
the basic service layer determines first role information, where the first role information indicates an expected role of the first electronic device, and the expected role of the first electronic device is: a main control node device, wherein the main control node device is a device configured to control a terminal node device; or a terminal node device, and wherein the first role information further indicates whether the expected role of the first electronic device is negotiable;
the basic service layer sends an advertising event to the controller, where the advertising event indicates an advertising policy;
the controller sends an advertising message based on the advertising event to a second electronic device, where the advertising message includes address information of the first electronic device;
the controller receives a first access request of the second electronic device in response to the advertising message;
the controller sends a second access request to the basic service layer based on the received first access request, where the first access request and the second access request are used to request the first electronic device to access the second electronic device, the first access request and the second access request include second role information indicating an expected role of the second electronic device, and the expected role of the second electronic device is: a main control node device, wherein the main control node device is a device configured to control a terminal node device; or a terminal node device, and wherein the second role information further indicates whether the expected role of the second electronic device is negotiable;
the basic service layer determines final roles of the first electronic device and the second electronic device, wherein:
   the final role of the first electronic device is negotiable or non-negotiable;
   the final role of the second electronic device is negotiable or non-negotiable;
   the final role of the first electronic device is different from a final role of the second electronic device; and
   the final role of the first electronic device and the final role of the second electronic device are determined based on:
      the expected role of the first electronic device;
      the expected role of the second electronic device;
      whether the final role of the first electronic device is negotiable or non-negotiable; and
      whether the final role of the second electronic device is negotiable or non-negotiable;
   wherein if the expected roles of the first and second electronic devices are the same:
      if the expected role of the first electronic device is negotiable, and the expected role of the second electronic device is negotiable, the final role of the first electronic device is a changed expected role and the final role of the second electronic device is the expected role;
      if the expected role of the first electronic device is negotiable, and the expected role of the second electronic device is non-negotiable, the final role of the first electronic device is a changed expected role, and the final role of the second electronic device is the expected role;
         and
      if both the expected role of the first electronic device and the expected role of the second electronic device are non-negotiable, access fails;
      the controller receives a second response from the basic service layer in response to the second access request;
   the controller sends a first response to the second electronic device based on the received second response, where the first response and the second response indicate that access of the first electronic device to the second electronic device is agreed; and
   the controller establishes a logical channel, and sends a logical channel identifier for identifying the logical channel to the basic service layer, to establish a control channel corresponding to the logical channel at the basic service layer.

According to the device connection method provided in this embodiment of this application, for a next-generation short-range access technology (for example, SLE), the controller and the upper basic service layer are disposed in the first electronic device, and the basic service layer triggers establishment of the control channel. To be specific, the basic service layer triggers establishment of the control channel by determining the first role information and sending the advertising event.

The basic service layer, the controller, and a peer device (for example, the second electronic device) establish the logical channel by exchanging information such as an access request (for example, the first access request and the second access request) and an access response (for example, the first response and the second response), to establish the control channel, thereby implementing a connection between the first electronic device and the peer device, and providing a basis for subsequent data transmission. In addition, in the short-range access technology provided in this application, because final roles of the first electronic device and the peer device may be determined based on expected roles of the two parties, the roles of the two parties can be flexible and changeable based on an actual scenario, and communication flexibility is high. This is very applicable to a product having flexibility and a miniaturization feature and a service having a small bandwidth, low power consumption, and a low rate, and can be better applicable to a multi-device connection scenario (that is, one electronic device may be connected to a plurality of devices at the same time and a role is not fixed). In conclusion, an application range is large.

Optionally, the advertising event includes the first role information, and the advertising message includes the first role information.

According to the device connection method provided in this embodiment of this application, the first role information is carried in the advertising message, so that the peer device (for example, the second electronic device) can determine a role of the peer device based on the first role information, and the peer device can match, as far as possible in an initial phase of a connection process, an expected role different from the expected role of the first electronic device, thereby improving connection efficiency.

According to a second aspect, a device connection method is provided, applied to a second electronic device. The second electronic device supports a short-range access technology and includes a basic service layer and a controller, and the method includes:
the controller receives an advertising message from a first electronic device, where the advertising message includes address information of the first electronic device;
the basic service layer sends second role information to the controller, where the second role information indicates an expected role of the second electronic device, and the expected role of the second electronic device is: a main control node device, wherein the main control node device is a device configured to control a terminal node device; or a terminal node device, and wherein the second role information further indicates whether the expected role of the second electronic device is negotiable;
the controller sends a first access request to the first electronic device in response to the advertising message, where the first access request is used to request the first electronic device to access the second electronic device, and the first access request includes the second role information and the address information of the first electronic device;
the controller receives a first response of the first electronic device in response to the first access request, where the first response indicates that access of the first electronic device to the second electronic device is agreed, wherein: the final role of the first electronic device is negotiable or non-negotiable; the final role of the second electronic device is negotiable or non-negotiable; the final role of the first electronic device is different from a final role of the second electronic device; and the final role of the first electronic device and the final role of the second electronic device are determined by the first electronic device based on: the expected role of the first electronic device, wherein the expected role of the first electronic device is a main control node device, wherein the main control node device is a device configured to control a terminal node device, or a terminal node device; the expected role of the second electronic device; whether the final role of the first electronic device is negotiable or non-negotiable; and whether the final role of the second electronic device is negotiable or non-negotiable; wherein if the expected roles of the first and second electronic devices are the same: if the expected role of the first electronic device is negotiable, and the expected role of the second electronic device is negotiable, the final role of the first electronic device is a changed expected role and the final role of the second electronic device is the expected role; if the expected role of the first electronic device is negotiable, and the expected role of the second electronic device is non-negotiable, the final role of the first electronic device is a changed expected role, and the final role of the second electronic device is the expected role; and if both the expected role of the first electronic device and the expected role of the second electronic device are non-negotiable, access fails; and
the controller establishes a logical channel, and sends a logical channel identifier for identifying the logical channel to the basic service layer, to establish a control channel corresponding to the logical channel at the basic service layer.

According to the device connection method provided in this embodiment of this application, for a next-generation short-range access technology (for example, SLE), the controller and the upper basic service layer are disposed in the second electronic device. The second electronic device initiates the first access request to the controller based on the advertising message of the first electronic device that is obtained by the controller through scanning and the second role information delivered by the basic service layer, and establishes the logical channel after receiving the first request response, to establish the control channel, thereby implementing a connection between the second electronic device and a peer device, and providing a basis for subsequent data transmission. In addition, in the short-range access technology provided in this application, because final roles of the second electronic device and the peer device may be determined based on expected roles of the two parties, the roles of the two parties can be flexible and changeable based on an actual scenario, and communication flexibility is high. This is very applicable to a product having flexibility and a miniaturization feature and a service having a small bandwidth, low power consumption, and a low rate, and can be better applicable to a multi-device connection scenario (that is, one electronic device may be connected to a plurality of devices at the same time and a role is not fixed). In conclusion, an application range is large.

Optionally, the advertising message includes first role information indicating the expected role of the first electronic device.

Optionally, that the controller sends a first access request to the first electronic device in response to the advertising message includes:
the controller sends the first access request to the first electronic device after obtaining the advertising message through scanning, where the first electronic device is a device within a whitelist of the second electronic device.

According to the device connection method provided in this embodiment of this application, all devices in the whitelist are devices that have been previously connected to the second electronic device. Therefore, the controller scans a device based on the whitelist, and may directly initiate an access request after finding a device in the whitelist through scanning. This simplifies a process of reporting a result to an upper layer, and reduces time required for a connection, to implement a quick connection between devices, and improve efficiency of a connection process.

Optionally, that the basic service layer sends second role information to the controller includes:
the basic service layer sends connection information to the controller, where the connection information includes the second role information, and the connection information further includes information indicating the controller to enable the whitelist of the second electronic device.

Optionally, the connection information further includes information indicating a connection mode, the connection mode is a single-device connection mode or a multi-device connection mode, the single-device connection mode indicates that the second electronic device can be connected to only one electronic device in a same time period, and the multi-device connection mode indicates that the second electronic device can be connected to a plurality of electronic devices in a same time period.

According to a fifth aspect, an electronic device for device connection is provided, including a processor. The processor is coupled to a memory, and may be configured to execute instructions in the memory, to implement the method in any one of the possible implementations of any one of the first aspect, the second aspect, or the third aspect. The electronic device further includes the memory. Optionally, the apparatus further includes a communication interface, and the processor is coupled to the communication interface.

According to a sixth aspect, a computer-readable storage medium is provided. The computer-readable storage medium stores a computer program. When the computer program is executed by an apparatus, the apparatus is enabled to implement the method in any one of the possible implementations of any one of the first aspect, the second aspect, or the third aspect.

According to a seventh aspect, a computer program product including instructions is provided. When the instructions are executed by a computer, an apparatus is enabled to implement the method in any one of the possible implementations of any one of the first aspect, the second aspect, or the third aspect.

According to an eighth aspect, a chip is provided and includes: an input interface, an output interface, a processor, and a memory. The input interface, the output interface, the processor, and the memory are connected through an internal connection path, the processor is configured to execute code in the memory, and when the code is executed, the processor is configured to perform the method in any one of the possible implementations of any one of the first aspect, the second aspect, or the third aspect.

### BRIEF DESCRIPTION OF DRAWINGS

FIG. 1 is a schematic diagram of a communication system according to an embodiment of this application;
FIG. 2 is a schematic diagram of a structure of an electronic device 200 according to an embodiment of this application;
FIG. 3 is a schematic diagram of a protocol architecture of a short-range access technology according to an embodiment of this application;
FIG. 4A and FIG. 4B are a schematic flowchart of a device connection method 400 according to an embodiment of this application;
FIG. 5A and FIG. 5B are a schematic flowchart of a device connection method 500 according to an embodiment of this application;
FIG. 6A and FIG. 6B are a schematic flowchart of a device connection method 600 according to an embodiment of this application;
FIG. 7A and FIG. 7B are a schematic flowchart of a device connection method 700 according to an embodiment of this application;
FIG. 8 is a schematic flowchart of a control channel disconnection method 800 according to an embodiment of this application;
FIG. 9 is a schematic flowchart of a device connection method 900 according to an embodiment of this application;
FIG. 10 is a schematic flowchart of a device connection method 1000 according to an embodiment of this application;
FIG. 11 is a schematic flowchart of a device connection method 1100 according to an embodiment of this application;
FIG. 12 is a schematic block diagram of an electronic device 1200 according to an embodiment of this application; and
FIG. 13 is a schematic diagram of a structure of an electronic device 1300 according to an embodiment of this application.

### DESCRIPTION OF EMBODIMENTS

The following describes technical solutions of this application with reference to accompanying drawings.

Embodiments of this application may be applied to various short-range access technologies between electronic devices. The short-range access technologies include but are not limited to a sparklink basic (sparklink basic, SLB) access technology and a sparklink low energy (sparklink low energy, SLE) access technology. SLB may support transmission of a high-bandwidth service such as projection, virtual reality (virtual reality, VR), and in-vehicle communication, and SLE may support transmission of a low-bandwidth, low-rate, and low-power-consumption service such as audio and video playing, a keyboard, a mouse, and an electronic stylus. Unless otherwise specified, the access technology described in the following is a short-range access technology, the SLB access technology is referred to as SLB for short, and the SLE access technology is referred to as SLE for short.

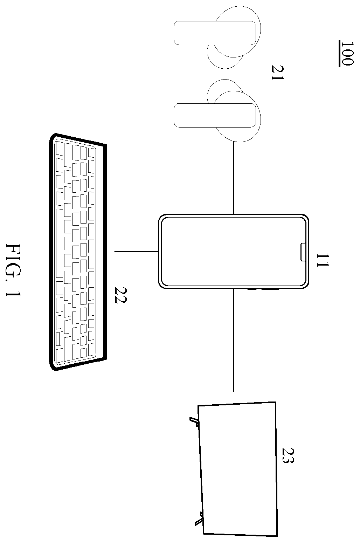

FIG. 1 is a schematic diagram of a communication system according to an embodiment of this application. As shown in FIG. 1, the communication system includes at least one first electronic device (for example, first electronic devices 21, 22, and 23) and a second electronic device 11, and the second electronic device 11 and each first electronic device may establish a connection by using a short-range access technology to perform communication. It should be understood that the communication system shown in FIG. 1 is merely an illustrative description, and the communication system may further include another device. For example, the communication system may further include a device such as a router or a base station. It should be noted that embodiments of this application do not limit quantities of first electronic devices and second electronic devices included in the communication system.

The first electronic device in embodiments of this application may be, for example, a keyboard, a mouse, an e-book, a headset, a screen, a camera, VR glasses, an in-vehicle central control console, or a smart home device. For example, the smart home device may be a device such as a smart air purifier, a smart air conditioner, a smart camera, a smart alarm clock, a vacuum cleaning robot, or a smart speaker. In some embodiments, the first electronic device may alternatively be, for example, a mobile phone, a tablet computer, or a wearable electronic device (such as a smartwatch) with a wireless communication function.

The second electronic device in embodiments of this application may be, for example, a mobile phone, a tablet computer, or a wearable electronic device (such as a smartwatch) with a wireless communication function. The second electronic device may include but is not limited to a portable electronic device using iOS^{®}, Android^{®}, Microsoft^{®}, Windows, Linux, or another operating system. In some embodiments, the second electronic device may alternatively be another electronic device, such as a laptop computer (Laptop), an in-vehicle speaker, a camera, or a rear view mirror.

The first electronic device and the second electronic device may support at least one short-range access technology. In some embodiments, the first electronic device and the second electronic device may support at least one of SLE and SLB. For example, a device such as a mobile phone, a tablet computer, or a wearable device may support both SLE and SLB. For another example, VR glasses, an in-vehicle central control console, and a camera may support SLB. For another example, a device such as a headset, a mouse, a keyboard, or an e-book may support SLE.

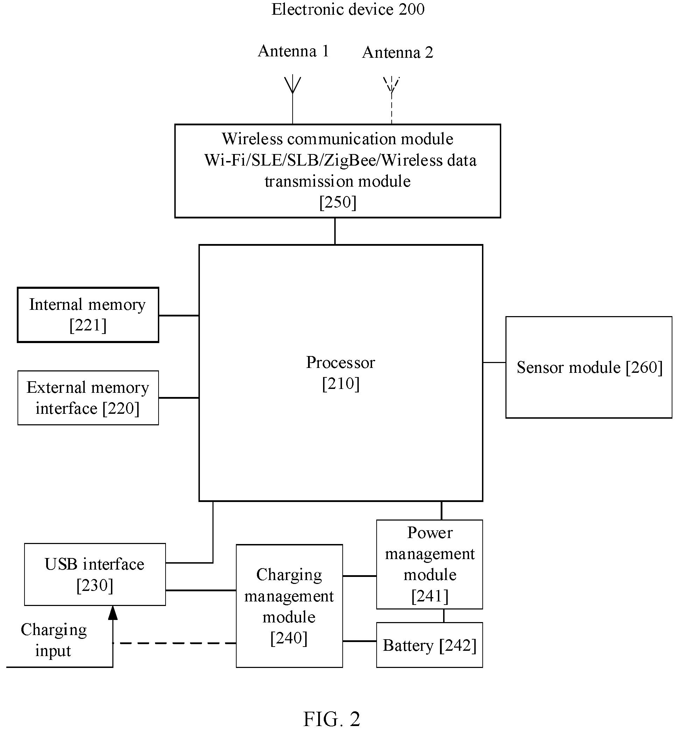

FIG. 2 is a schematic diagram of a structure of an electronic device 200 according to an embodiment of this application. The electronic device 200 may be the first electronic device or the second electronic device.

The electronic device 200 may include a processor 210, an external memory interface 220, an internal memory 221, a universal serial bus (universal serial bus, USB) interface 230, a charging management module 240, a power management module 241, a battery 242, an antenna 1, an antenna 2, a wireless communication module 250, a sensor module 260, and the like.

It may be understood that the structure shown in this embodiment of this application does not constitute a specific limitation on the electronic device 200. In some other embodiments of this application, the electronic device 200 may include more or fewer components than those shown in the figure, or combine some components, or split some components, or have different component arrangements. The components shown in the figure may be implemented by hardware, software, or a combination of software and hardware.

The processor 210 may include one or more processing units. For example, the processor 210 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors. In some embodiments, the electronic device 200 may include one or more processors 210. The controller may generate an operation control signal based on instruction operation code and a time sequence signal, to complete control of instruction fetching and instruction execution.

In some embodiments, the processor 210 may include one or more interfaces. The interface may include an inter-integrated circuit (inter-integrated circuit, I2C) interface, an inter-integrated circuit sound (integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a SIM card interface, a USB interface, and/or the like. The USB interface 230 is an interface conforming to a USB standard specification, and may be specifically a mini USB interface, a micro USB interface, a USB Type-C interface, or the like. The USB interface 230 may be configured to connect to a charger to charge the electronic device 200, or may be configured to transmit data between the electronic device 200 and a peripheral device.

It may be understood that the interface connection relationship between the modules shown in this embodiment of this application is merely an example, and does not constitute a limitation on the structure of the electronic device 200. In some other embodiments of this application, the electronic device 200 may alternatively use an interface connection manner different from that in the foregoing embodiment, or a combination of a plurality of interface connection manners.

The charging management module 240 is configured to receive charging input from a charger. The charger may be a wireless charger, or may be a wired charger. In some wired charging embodiments, the charging management module 240 may receive charging input from a wired charger through the USB interface 230. In some wireless charging embodiments, the charging management module 240 may receive wireless charging input through a wireless charging coil of the electronic device 200. When charging the battery 242, the charging management module 240 may further supply power to the smart device through the power management module 241.

The power management module 241 is configured to connect the battery 242, the charging management module 240, and the processor 210. The power management module 241 receives input from the battery 242 and/or the charging management module 240, and supplies power to the processor 210, the internal memory 221, the external memory interface 220, the wireless communication module 250, and the like. The power management module 241 may be further configured to monitor parameters such as a battery capacity, a battery cycle count, and a battery health status (leakage or impedance). In some other embodiments, the power management module 241 may alternatively be disposed in the processor 210. In some other embodiments, the power management module 241 and the charging management module 240 may alternatively be disposed in a same component.

A wireless communication function of the electronic device 200 may be implemented by using the antenna 1, the antenna 2, the wireless communication module 250, and the like.

The wireless communication module 250 may provide a wireless communication solution that is applied to the electronic device 200 and that includes Wi-Fi, Bluetooth (Bluetooth, BT), SLE, SLB, a wireless data transmission module (for example, 433 MHz, 868 MHz, or 915 MHz), and the like. The wireless communication module 250 may be one or more components that integrate at least one communication processing module. The wireless communication module 250 receives an electromagnetic wave through the antenna 1 or the antenna 2, performs filtering and frequency modulation on an electromagnetic wave signal, and sends a processed signal to the processor 210. The wireless communication module 250 may further receive a to-be-sent signal from the processor 210, perform frequency modulation and amplification on the to-be-sent signal, and convert the to-be-sent signal into an electromagnetic wave for radiation through the antenna 1 or the antenna 2.

In some embodiments, for SLE, the electronic device 200 serves as a first electronic device of an advertising party, and the electronic device 200 may send an advertising message by using the wireless communication module, so that a surrounding second electronic device finds the electronic device 200 through scanning to initiate a first access request. For example, the advertising message may include role information of the electronic device 200, to indicate that an expected role of the electronic device 200 is a G node device or a T node device (detailed description is provided below), so that the second electronic device determines a role of the second electronic device. The first access request may include role information of the second electronic device. The electronic device 200 sends, based on the received first access request, a first access response in response to the first access request to the second electronic device, to indicate whether access of the electronic device 200 to the second electronic device is agreed. When access of the electronic device 200 to the second electronic device is agreed, the electronic device 200 establishes a logical channel with the second electronic device to implement a connection of a control channel, thereby implementing a connection between the electronic device 200 and the second electronic device.

In some other embodiments, for SLE and SLB, the electronic device 200 serves as a second electronic device receiving an advertising message, and the electronic device 200 is configured to be in an automatic connection scanning mode and a multi-device connection mode. After finding, through scanning, an advertising message sent by a first electronic device, and finding, through scanning, the first electronic device in a whitelist of the electronic device 200, the electronic device 200 may directly initiate a first access request. In the multi-device connection mode, if a preset condition is met, scanning is stopped, or if a preset condition is not met, scanning continues.

The external memory interface 220 may be configured to connect to an external memory card, such as a micro SD card, to expand a storage capability of the electronic device 200. The external memory card communicates with the processor 210 through the external memory interface 220, to implement a data storage function. For example, files such as music or videos are stored in the external memory card.

The internal memory 221 may be configured to store one or more computer programs, and the one or more computer programs include instructions. The processor 210 may run the instructions stored in the internal memory 221, so that the electronic device 200 performs a discovery and network configuration method provided in some embodiments of this application, various applications, data processing, and the like. The internal memory 221 may include a code storage area and a data storage area. The code storage area may store an operating system. The data storage area may store data created in a process of using the electronic device 200, and the like. In addition, the internal memory 221 may include a high-speed random access memory, and may further include a non-volatile memory, such as one or more magnetic disk storage components, a flash memory component, and a universal flash storage (universal flash storage, UFS). In some embodiments, the processor 210 may run the instructions stored in the internal memory 221 and/or instructions stored in a memory disposed in the processor 210, to enable the electronic device 200 to perform a discovery and network configuration method provided in embodiments of this application, other applications, and data processing.

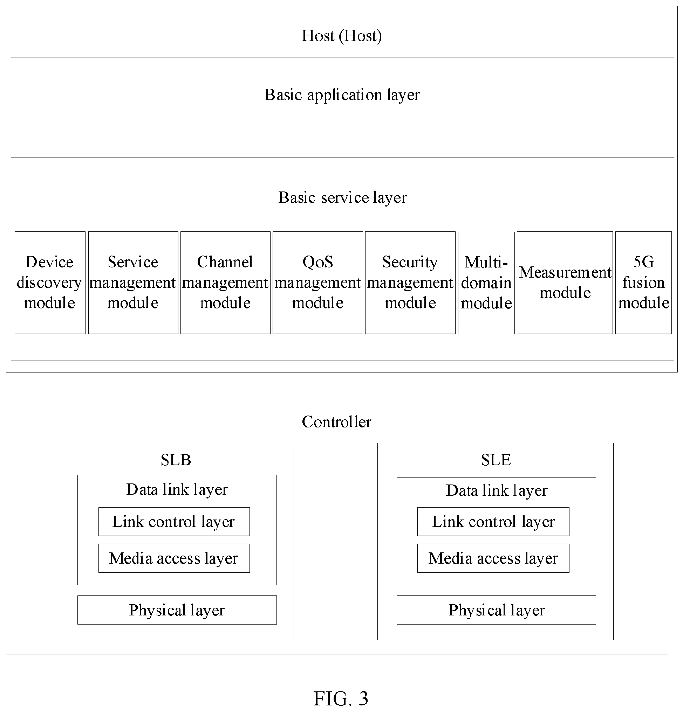

FIG. 3 is a schematic diagram of a protocol architecture of a short-range access technology according to an embodiment of this application. The protocol architecture is applied to any electronic device that can implement short-range communication, for example, may be applied to the foregoing first electronic device and second electronic device. As shown in FIG. 3, the protocol architecture includes but is not limited to a host (host) and a controller (controller). The host is an upper-layer protocol of the controller, and the host includes a basic application layer and a basic service layer. The following describes the controller, the basic service layer, and the basic application layer in detail.

### Controller

The controller defines a bottom-layer hardware part, may also be referred to as an access layer, is a bottom layer of the protocol architecture, and includes a physical layer and a data link layer. The physical layer uses a transmission medium to provide a physical connection for the data link layer, to implement transparent transmission of a bitstream. The data link layer implements functions such as resource management, access control, data segmentation, concatenation, and a working mode to ensure reliable data transmission. In some embodiments, the data link layer includes a media access layer and a link control layer. The media access layer is configured to perform radio resource allocation and provide a data transmission service for the link control layer. The link control layer is configured to exchange a link control protocol on a control link based on a link established between electrical devices, to manage a physical/logical link and control device behavior.

A logical channel is established in the controller, and the logical channel is a basis for establishing a transmission channel at the upper basic service layer. The transmission channel at the basic service layer is available only after the logical channel is successfully established. It should be understood that, unless otherwise specified, the logical channel in embodiments of this application is a basic logical channel in the controller, and the controller further has a dedicated link that is established on the basic logical channel and that is provided for some specific service (for example, a high-definition call) scenarios. The dedicated link is also a logical channel, but needs to be established based on the basic logical channel.

In addition, to distinguish between logical channels, a logical channel identifier (logic channel identifier, LCID) is defined.

The controller may support different short-range access technologies. For example, the controller may support at least one of SLE and SLB. During implementation, the controller may exist in a form of software or hardware. The controller may be integrated into a chip. When the controller can support both SLE and SLB, the controller may be integrated into one chip, and the chip implements SLE and SLB. Alternatively, the controller may be integrated into two chips, and the two chips implement SLE and SLB respectively.

### Basic service layer

The basic service layer is a protocol layer between the controller and the basic application layer, includes a plurality of function units, and is unbound from a service, to implement a common function process. In addition, the basic service layer establishes a transmission channel for a service, processes data on the transmission channel, and sends the data to the controller. The basic service layer includes but is not limited to the following function modules: a device discovery module, a service management module, a channel management module, a quality of service (quality of service, QoS) management module, a security management module, a multi-domain negotiation module, a measurement module, and a 5G fusion module.

The device discovery module is configured to advertise a capability of the device and scan a peer device that meets a service requirement, and further supports mutual discovery of SLB and SLE.

The service management module is configured to define a data structure, and is a data module providing a control instruction and small data sending for a service function set at the basic application layer.

The channel management module is used by the basic application layer to apply for a transmission channel based on a service type (business identifier, BID) and a QoS capability of a service to transmit a data stream, and manages establishment and release of the transmission channel and a mapping relationship between the transmission channel and a logical link for the service.

The QoS management module is configured to manage a QoS request static table of the service and negotiate QoS with a peer device.

The security management module is used for secure connection at the basic service layer.

The multi-domain negotiation module is configured to implement information exchange between domains and implement interference avoidance and load balancing between a plurality of domains in a scenario in which there are a plurality of domains (subnets).

The measurement module is used for configuration of a bottom-layer measurement period, a measurement report event, and a measurement value, and is used for scheduling, power control, and the like.

The 5G fusion module is configured to establish a channel having a cellular 5G remote management capability, and implement, by using an authentication and verification mechanism, a device having a cellular 5G remote control function.

To distinguish from the logical channel in the controller, a transmission channel identifier (transmission channel identifier, TCID) of the transmission channel at the basic service layer is defined.

The transmission channel at the basic service layer includes a control channel and a service channel. Establishment of the control channel is a basis for establishing the service channel between devices. Embodiments of this application relate to related content of the control channel. The following describes only the control channel in detail. For each access technology (for example, SLE or SLB), at least one control channel may be designed at the basic service layer, and the at least one control channel corresponds to one logical channel. In an example, a control channel is designed at a basic service layer of an electronic device that supports SLE. For example, a TCID of the control channel in SLE is 0x0008. In another example, a control channel is designed at a basic service layer of an electronic device that supports SLB. For example, a TCID in SLB is 0x0009.

It should be noted that the control channel is a channel that has been designed at the basic service layer, but the control channel corresponding to the logical channel can be used only after the logical channel in the controller is established. Therefore, in embodiments of this application, a process in which the logical channel is established and the control channel can be used is referred to as a process of establishing the control channel.

### Basic application layer

The basic application layer is configured to undertake different service requirements of an upper-layer application (application, APP) and split data to the lower basic service layer. Specifically, the basic application layer is configured to classify services, and includes a plurality of service function sets: a general-purpose perception framework, a general-purpose device management framework, a general-purpose audio and video framework, a general-purpose data framework, and the like. Each service function set includes a classification data processing module for a service. For example, the general-purpose audio and video framework includes a codec module, and the general-purpose data framework includes a data encryption and compression module.

In embodiments of this application, a host including a basic service layer and a basic application layer adapts to a plurality of short-range access technologies (for example, SLE and SLB). In other words, the host may be compatible with a plurality of access technologies, or a plurality of access technologies may use a same host. In other words, regardless of an access technology supported by a controller, an upper layer may use a same host.

Based on this, embodiments of this application relate to a control channel of a host in an electronic device, and a main objective is to establish the control channel in the host to implement a connection of the electronic device. Establishment of the control channel is a basis for establishing different service channels by the electronic device. Therefore, establishment of the control channel is crucial. In addition, embodiments of this application further relate to release of the control channel, to reduce an unnecessary waste of resources.

First, a main control (grant, G) node device and a terminal (terminal, T) node device in a communication process of an electronic device in embodiments of this application are described.

In the communication process of the electronic device, any electronic device may be used as a G node device, and another electronic device is used as a T node device. Whether an electronic device is used as a G node device or a T node device may be referred to as whether a role of the electronic device is a G node device or a T node device.

In SLB, because SLB is for a high-bandwidth service, a role of an electronic device may be fixed. The role of the electronic device is fixed before delivery, and the electronic device is uniquely used as a G node device or a T node device. For example, in an in-vehicle device, an in-vehicle central control console may be fixedly used as a G node device, and devices such as a camera, a rear view mirror, and an in-vehicle speaker in a vehicle may be fixedly used as T node devices.

In SLE, because SLE supports a service with a small bandwidth, low power consumption, and a low rate, a product has features of flexibility and miniaturization, and even a same device may be not only a G node device but also a T node device when being connected to a plurality of devices. Therefore, in SLE, a role of an electronic device is variable, so that a host maintains a role relationship, especially for a scenario in which a role changes in a multi-device connection process. In addition, in SLE, after a control channel between electronic devices is established, a G node device sends a C frame. The C frame is a control frame that carries control information of a T device, and is used to implement functions of time sequence synchronization, resource allocation, and scheduling for the T node device. The T node device receives the C frame, and sends a T frame to the G node device based on the C frame. The T frame is a data frame, and may implement functions of short time sequence synchronization, control signaling, and data transmission. Therefore, in SLE, determining a role of an electronic device also helps a controller correctly transmit content such as a C frame and a T frame based on a determined G node device and T node device. For example, when an electronic device is connected to another electronic device for the first time, the electronic device may be used as a G node device, and the another electronic device is used as a T node device. In a process in which the electronic device is connected to the another electronic device again, the electronic device may be used as a T node device, and the another electronic device is used as a G node device. A specific case may be flexibly determined based on an actual situation.

In a process of establishing a control channel, embodiments of this application mainly relate to two scenarios. A first scenario is a scenario in which electronic devices are connected for the first time, and a second scenario is a scenario in which electronic devices were successfully connected before and can be automatically connected subsequently.

The following uses the first electronic device and the second electronic device as an example to describe, based on interaction between the first electronic device and the second electronic device and interaction between layers inside the electronic device with reference to the protocol architecture shown in FIG. 3, a process of establishing a control channel between electronic devices in the foregoing two scenarios. A basic service layer in each of the first electronic device and the second electronic device relates to a device discovery module, a channel management module, and a security management module.

### Scenario 1: initial connection between electronic devices

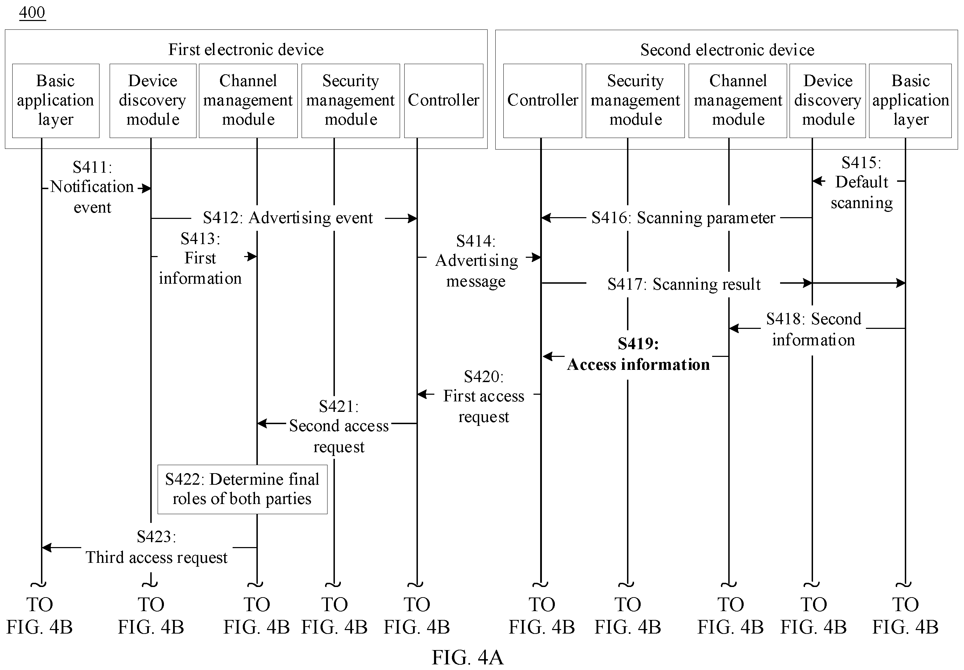

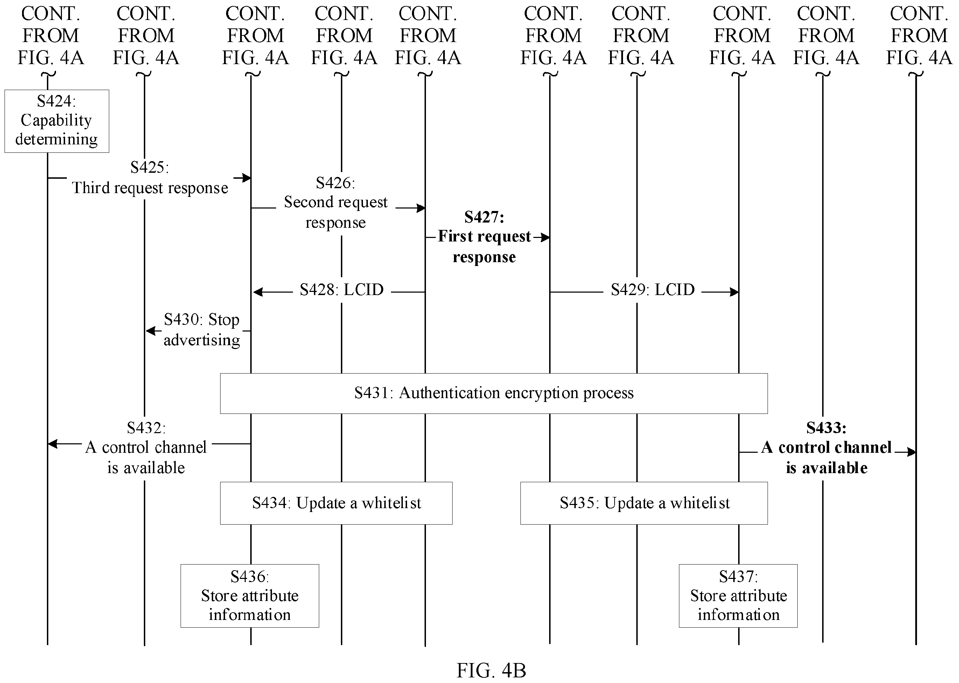

FIG. 4A and FIG. 4B are a schematic flowchart of a device connection method 400 according to an embodiment of this application. The method 400 describes a process in which a first electronic device and a second electronic device establish a control channel based on SLE to implement initial connection. For example, the first electronic device may be a headset, and the second electronic device may be a mobile phone.

A process of the method 400 is mainly as follows: Process 1: The first electronic device sends an advertising message, and the surrounding second electronic device performs a related operation based on the advertising message. Process 2: The first electronic device and the second electronic device establish the control channel. In some embodiments, the first electronic device and the second electronic device may further perform authentication encryption on the control channel, to protect user privacy.

### Process 1: The first electronic device sends an advertising message, and the second electronic device performs a related operation based on the advertising message.

S411: A basic application layer of the first electronic device sends a notification event to a device discovery module at a basic service layer, where the notification event is used to determine role information of the first electronic device.

The role information of the first electronic device indicates that an expected role of the first electronic device is a G node device or a T node device, and may provide a reference for subsequently determining an expected role of the second electronic device and final roles of the first electronic device and the second electronic device. Optionally, the role information of the first electronic device further indicates whether the expected role of the first electronic device is negotiable, so that when the expected roles of the first electronic device and the second electronic device are the same, the expected role is changed through negotiation to determine the final roles of the two electronic devices.

The expected role of the first electronic device represents a role that the first electronic device expects to be, and the final role of the first electronic device represents a role that the first electronic device actually becomes finally. The two roles may be the same or may be different. Explanations of the expected role and the final role of the second electronic device below are the same as the explanations herein, and details are not described again.

When the role information of the first electronic device indicates the expected role of the first electronic device and whether the expected role is negotiable, for example, the role information of the first electronic device may be indicated by using two bits (bit), where one bit (denoted as a first bit) indicates the expected role of the first electronic device, and the other bit (denoted as a second bit) indicates whether the role is negotiable.

In an example, the first bit is a lower-order bit in the two bits, and the second bit is a higher-order bit in the two bits.

In another example, the first bit is a higher-order bit in the two bits, and the second bit is a lower-order bit in the two bits.

In an example, if the first bit is "0", it indicates a T node device, or if the first bit is "1", it indicates a G node device.

In another example, if the first bit is "1", it indicates a T node device, or if the first bit is "0", it indicates a G node device.

In an example, if the second bit is "0", it indicates that the role is negotiable, or if the second bit is "1", it indicates that the role is non-negotiable.

In another example, if the second bit is "1", it indicates that the role is negotiable, or if the second bit is "0", it indicates that the role is non-negotiable.

For example, the first bit is a lower-order bit, the second bit is a higher-order bit, the first bit being "0" indicates a T node device, the first bit being "1" indicates a G node device, the second bit being "0" indicates that the role is negotiable, and the second bit being "1" indicates that the role is non-negotiable. Table 1 shows various possible cases of the role information of the first electronic device. Table 1 shows four cases of the role information. One row represents one case of the role information, and each case includes whether the role is negotiable and the expected role. "Y" indicates that the role is negotiable, "N" indicates that the role is non-negotiable, "T" indicates a T node device, and "G" indicates a G node device.

**Table 1**

| Role information (2 bits) | Negotiable | Expected role |
|---|---|---|
| 00 | Y | T |
| 01 | Y | G |
| 10 | N | T |
| 11 | N | G |

In some embodiments, the notification event includes information about an operation performed by a user on the first electronic device. For SLE, if the first electronic device is a headset, for example, the operation performed by the user on the first electronic device may be long-pressing a button; if the first electronic device is a mobile phone, for example, the operation performed by the user on the first electronic device may be enabling SLE in settings; or if the first electronic device is a keyboard, for example, the operation performed by the user on the first electronic device may be pressing a physical switch used for connection. In this embodiment, the basic application layer obtains the operation performed by the user on the first electronic device, and sends the operation to the device discovery module at the basic service layer, so that the device discovery module determines that an access technology used for communication between the first electronic device and another electronic device is SLE, and determines the role information of the first electronic device.

In some other embodiments, the notification event includes information indicating that the access technology is SLE. In this embodiment, the basic application layer obtains the operation performed by the user on the first electronic device, and determines, based on the operation, that an access technology used for communication between the first electronic device and another electronic device is SLE, so that the device discovery module determines the role information of the first electronic device.

In some other embodiments, the notification event includes the role information of the first electronic device. In this embodiment, the basic application layer obtains the operation performed by the user on the first electronic device, determines, based on the operation, that an access technology used for communication between the first electronic device and another electronic device is SLE, and determines the role information of the first electronic device.

For example, the role information of the first electronic device may be determined based on a service type and a historical role of the first electronic device. For example, if the first electronic device is a headset, and the service type is an audio service, the expected role may be a T node device. For another example, if the historical role of the first electronic device is a T node device, the expected role determined herein is the T node device.

S412: The device discovery module of the first electronic device configures an advertising event and sends the advertising event to a controller, where the advertising event indicates an advertising policy and includes a parameter for advertising.

The parameter for advertising includes but is not limited to: an advertising mode (adv mode), a discovery level, an advertising interval, advertising duration, or an advertising flag (adv flag).

The advertising mode is that another device needs to establish a connection to the first electronic device. The discovery level is, for example, any one of undiscoverable, general discovery, and preferential discovery. The advertising interval indicates a period for sending an advertising message, and the advertising duration indicates duration of each time of advertising. The advertising flag indicates a public (public) or private advertising address.

Optionally, the advertising event further includes the role information of the first electronic device.

Optionally, the advertising event further includes device filtering information indicating a device that requests to access the first electronic device. For initial connection, the device filtering information indicates that the first electronic device is allowed to access a device within or outside a whitelist of the first electronic device, that is, the first electronic device is allowed to access all devices that request to access the first electronic device. The device in the whitelist of the first electronic device is a device that was connected to the first electronic device. In this way, an initial connection process between the first electronic device and a new electronic device (for example, the second electronic device) can be implemented. A reason is as follows: Although the first electronic device stores the whitelist, the first electronic device is not limited to connecting to a device in the whitelist, and the first electronic device also wants to establish a connection to a new electronic device that has not been connected to the first electronic device. Therefore, the device filtering information may be used to indicate that the first electronic device is allowed to access a device within or outside the whitelist of the first electronic device, to implement initial connection between the first electronic device and the new electronic device. In an example, the whitelist includes a media access control (media access control, MAC) address of at least one electronic device, and a MAC address of each electronic device uniquely identifies each electronic device.

S413: The device discovery module of the first electronic device sends first information to a channel management module based on the notification event.

The device discovery module determines, based on the notification event, an access technology used for communication between the first electronic device and another electronic device, to determine the first information and send the first information to the channel management module.

For SLE, the first information includes the role information of the first electronic device, to help subsequently determine the final roles of the first electronic device and the second electronic device. Optionally, the first information may further include advertising status information indicating an advertising status of the first electronic device, where the advertising status information indicates that the first electronic device is in an advertising state, so that advertising is stopped in a timely manner after the control channel is connected, thereby reducing power consumption.

S414: The controller of the first electronic device sends the advertising message based on the advertising event.

The controller determines and sends the advertising message based on the advertising event received in S412, where the advertising message includes but is not limited to: address information of the first electronic device, the advertising mode (adv mode), or the advertising flag (adv flag).

Optionally, when the advertising event further includes the role information of the first electronic device, the advertising message further includes the role information of the first electronic device.

It should be understood that different access technologies correspond to different advertising message formats. Using SLE and SLB as an example, SLE corresponds to one advertising message format, SLB corresponds to another advertising message format, and the two advertising message formats are different. For example, advertising message formats corresponding to different access technologies may be predefined in a protocol. Only when a sender and a receiver of an advertising message support a same access technology, the receiver can successfully parse the advertising message. When a sender and a receiver of an advertising message do not support a same access technology, the advertising message fails to be parsed.

It should be noted that sequence numbers of the steps do not mean an execution sequence in embodiments of this application. The execution sequence of the steps should be determined based on functions and internal logic of the steps, and should not constitute any limitation on the implementation processes of embodiments of this application.

For example, S412 may be performed before or after S413, or may be performed with S413 at the same time.

For another example, S414 may be performed before or after S413, or may be performed with S413 at the same time.

S415: A basic application layer of the second electronic device sends scanning mode information to a device discovery module, where the scanning mode information indicates that a scanning mode of the second electronic device is a default scanning mode.

The default scanning mode indicates that the second electronic device can scan any device that can be found through scanning, and does not need to selectively scan a surrounding device or filter out some devices. This is applicable to a scenario in which two electronic devices are connected for the first time.

Compared with the default scanning mode, another scanning mode is an automatic connection scanning mode. In this scanning mode, a surrounding device needs to be scanned or some devices need to be filtered out under a specific constraint condition. This is applicable to a scenario in which two electronic devices are automatically connected. The following method 600 provides specific descriptions.

S416: The device discovery module of the second electronic device configures a scanning parameter and sends the scanning parameter to a controller based on the default scanning mode.

For example, the scanning parameter includes but is not limited to at least one of the following parameters: scanning duration, a scanning interval, and the like.

It should be noted that there is no fixed sequence for performing S415 and S416 and S411 to S414, and the sequence may be randomly changed, provided that S415 and S416 are performed before S417. For example, S415 and S416 are performed before, after, or simultaneously with S411 to S414. For another example, S415 and S416 may be performed before, after, or simultaneously with any step in S411 to S414.

S417: The controller of the second electronic device scans a surrounding device based on the scanning parameter, obtains the advertising message of the first electronic device through scanning, obtains a scanning result based on the advertising message, and sends the scanning result to the basic application layer through the device discovery module, that is, the controller sends the scanning result to the device discovery module, and the device discovery module sends the scanning result to the basic application layer.

The scanning result includes the address information of the first electronic device that is obtained from the advertising message.

Optionally, if the advertising message includes the role information of the first electronic device, the scanning result also includes the role information of the first electronic device.

It should be understood that, because the advertising message of the first electronic device is in a format corresponding to SLE, only when the second electronic device supports SLE, the second electronic device can successfully parse the advertising message sent by the first electronic device and can successfully perform S417.

If the second electronic device does not support SLE, S417 cannot be performed, connection between the two electronic devices fails, and the entire process ends.

S418: The basic application layer of the second electronic device sends second information to a channel management module based on the scanning result.

In some embodiments, the second information may be the scanning result in S418. Optionally, the second information may further include that an access technology used for communication between the second electronic device and the first electronic device is SLE.

During implementation, the basic application layer may send the second information to the channel management module based on a user operation and the scanning result obtained in S417.

In some embodiments, the basic application layer reports the scanning result to an app, the app displays a device discovery list, a user taps the first electronic device in the device discovery list, and the basic application layer sends the second information to the channel management module based on an operation performed by the user on the first electronic device. For example, using a mobile phone as an example, the app may be "Settings (setting)".

### Process 2: The first electronic device and the second electronic device establish the control channel.

S419: The channel management module of the second electronic device sends access information to the controller based on the second information.

The channel management module determines the access information based on the second information, and sends the access information to the controller.

For SLE, the access information includes but is not limited to the following content: role information of the second electronic device and the address information of the first electronic device. The address information of the first electronic device is obtained from the second information.

The role information of the second electronic device indicates that an expected role of the second electronic device is a G node device or a T node device. Optionally, the role information of the second electronic device further indicates whether a role of the second electronic device is negotiable, to determine a final role of the second electronic device. For a representation form of the role information of the second electronic device, refer to the foregoing specific descriptions of the representation form of the role information of the first electronic device. Details are not described again.

In some embodiments, the channel management module of the second electronic device may determine the role information of the second electronic device based on a service type and a historical role of the second electronic device. For example, if the second electronic device is a mobile phone, and the service type is an audio service, the expected role may be a G node device. For another example, if the historical role of the second electronic device is a G node device, the expected role determined herein is the G node device.

In some other embodiments, when the second information includes the role information of the first electronic device, the channel management module of the second electronic device may determine (or match) the role information of the second electronic device based on the role information of the first electronic device carried in the second information, so that an obtained expected role of the second electronic device is different from the expected role of the first electronic device.

In an example, if the expected role of the first electronic device is a T node device, regardless of whether the T node device is negotiable, the expected role of the second electronic device that is determined by the channel management module of the second electronic device may be a G node device.

In another example, if the expected role of the first electronic device is a G node device, regardless of whether the G node device is negotiable, the expected role of the second electronic device that is determined by the channel management module of the second electronic device may be a T node device.

In the foregoing example, the expected role of the second electronic device may be determined based on the expected role of the first electronic device, so that the expected roles of the two electronic devices are different. However, in some scenarios, both electronic devices expect to become a G node device or a T node device. As a result, the expected roles of the two parties are the same. In this case, the role information of the two parties may be used to indicate the expected roles and whether role negotiation can be performed, so that the final roles of the two parties are different. For example, the first electronic device may perform role negotiation, and when negotiation can be performed, change the role of the first electronic device. For specific descriptions, refer to the following specific descriptions of S422.

Optionally, the access information further includes address information of the second electronic device. The address information of the second electronic device may be finally sent to the first electronic device, so that after the two electronic devices are successfully connected, the first electronic device updates a whitelist (refer to S434), and after the two electronic devices complete authentication encryption, the first electronic device stores an address of the second electronic device, to use the second electronic device as a trusted device (refer to S436).

Optionally, the access information may further include information indicating the second electronic device to ignore a whitelist of the second electronic device. A device in the whitelist of the second electronic device is a device that was connected to the second electronic device, and indicating the second electronic device to ignore the whitelist of the second electronic device means that the second electronic device may connect to a device outside the whitelist.

When the second electronic device stores the whitelist, the second electronic device is not limited to connecting to a device in the whitelist, and also wants to establish a connection to a new electronic device that has not been connected to the second electronic device. Therefore, the information indicating to ignore the whitelist of the second electronic device may be carried in the access information. If the whitelist is enabled by the second electronic device before, when the second electronic device is connected to the first electronic device for the first time, if the whitelist of the second electronic device is not ignored, another electronic device that is located around the second electronic device and that was connected to the second electronic device may automatically connect to the second electronic device. Because a quantity of devices that can be connected to the second electronic device is limited, the connection between the first electronic device and the second electronic device is affected. Therefore, the information indicating the second electronic device to ignore the whitelist of the second electronic device is used to enable the second electronic device not to perform device connection based on the whitelist, so that a success of initial connection between the first electronic device and the second electronic device can be further ensured.

Optionally, the access information may further include information indicating a sending period (interval) and information indicating response duration (timeout). These parameters may be used for subsequent data transmission.

The sending period and the response duration are parameters used in a data transmission process after the control channel is successfully established. The sending period indicates an interval for sending data, and the response duration indicates valid duration for sending content for data after the data is received. The two parameters are subsequently stored in the controller of the first electronic device, to facilitate subsequent data transmission.

S420: The controller of the second electronic device sends a first access request to the first electronic device based on the access information, where the first access request is used to request the first electronic device to access the second electronic device.

Correspondingly, the controller of the first electronic device receives the first access request.

The controller sends the first access request based on the access information, where the first access request includes but is not limited to: the role information of the second electronic device and the address information of the first electronic device.

Optionally, the first access request further includes the address information of the second electronic device, so that after the first electronic device and the second electronic device are successfully connected, the first electronic device updates the whitelist (refer to S434), and after the two electronic devices complete authentication encryption, the first electronic device stores the address of the second electronic device, to use the second electronic device as a trusted device (refer to S436). The address information of the second electronic device may be obtained from the access information in S419.

Optionally, the first access request may further include at least one of the following: the information indicating the sending period (interval) and the information indicating the response duration (timeout). At least one of the foregoing items may be obtained from the access information in S419.

After receiving the first access request, the first electronic device performs a related operation (S421 to S428) based on the first access request, to determine whether to agree to access the second electronic device, so as to establish a connection to the second electronic device, and implement establishment of the control channel when the first electronic device agrees to access the second electronic device.

S421: The controller of the first electronic device sends a second access request to the channel management module based on the first access request, to request the first electronic device to access the second electronic device, where the second access request includes the role information of the second electronic device.

Optionally, the second access request further includes the address information of the second electronic device, so that after completing an authentication encryption process with the second electronic device, the first electronic device may locally store an address indicated by the address information, to use the second electronic device as a trusted device. For details, refer to S436. The address information of the second electronic device may be obtained from the first access request in S420.

S422: The channel management module of the first electronic device determines the final roles of the first electronic device and the second electronic device.

The channel management module determines the final roles of the first electronic device and the second electronic device based on the role information of the first electronic device obtained from the first information in S413 and the role information of the second electronic device obtained from the second access request in S421. It should be understood that the final role determined herein may be the same as or different from the expected role of the electronic device. With reference to Table 2, the following describes the process in two cases.

Table 2 uses the role information shown in Table 1 as an example to show final roles of two electronic devices that are determined based on various possible cases of role information of the two electronic devices.

It should be understood that 01 (negotiable, G) is used as an example, and words in parentheses are explanations and descriptions of meanings of two bits. The higher-order "0" indicates that a role is negotiable, and the lower-order "1" indicates that an expected role is G.

It should be further understood that, without considering a special case, "NA" in the table represents a case of inexistence. A reason is as follows: When the role information of the first electronic device is non-negotiable, in one case, the second electronic device may determine a matched role based on the role information of the first electronic device, and obtain an expected role different from that of the first electronic device; or in another case, the second electronic device wants to become an expected role the same as that of the first electronic device. Therefore, in this case, the expected role of the second electronic device is the same as the expected role of the first electronic device and is non-negotiable. Therefore, there is no case in which the expected role of the first electronic device is non-negotiable and the expected role of the second electronic device is the same as that of the first electronic device and is negotiable.

**Table 2**

| Role information | | First electronic device (for example, a headset) | | | |
|---|---|---|---|---|---|
| | | 00 (negotiable, T) | 01 (negotiable, G) | 10 (non-negotiable, T) | 11 (non-negotiable, G) |
| Second electronic device (for example, a mobile phone) | 00 (negotiable, T) | The first electronic device changes to G, and the second electronic device continues to be T | The role remains unchanged | NA | The role remains unchanged |
| | 01 (negotiable, G) | The role remains unchanged | The first electronic device changes to T, and the second electronic device continues to be G | The role remains unchanged | NA |
| | 10 (non-negotiable, T) | The first electronic device changes to G, and the second electronic device continues to be T | The role remains unchanged | Role negotiation fails, and access fails | The role remains unchanged |
| | 11 (non-negotiable, G) | The role remains unchanged | The first electronic device changes to T, and the second electronic device continues to be G | The role remains unchanged | Role negotiation fails, and access fails |

### Case 1: The expected role of the first electronic device is different from the expected role of the second electronic device.

In this case, the channel management module determines the expected role of the first electronic device as the final role, and determines the expected role of the second electronic device as the final role.

Using Table 2 as an example, the role information of the first electronic device is "00 (negotiable, T)" and the role information of the second electronic device is "01 (negotiable, G)" or "11 (non-negotiable, G)"; the role information of the first electronic device is "01 (negotiable, G)" and the role information of the second electronic device is "00 (negotiable, T)" or "10 (non-negotiable, T)"; the role information of the first electronic device is "10 (non-negotiable, T)" and the role information of the second electronic device is "01 (negotiable, G)" or "11 (non-negotiable, G)"; or the role information of the first electronic device is "11 (non-negotiable, G)" and the role information of the second electronic device is "00 (negotiable, T)" or "10 (non-negotiable, T)". Expected roles of the two electronic devices are different in each case, a role of each electronic device does not change, and an expected role of each electronic device is determined as a final role.

### Case 2: The expected role of the first electronic device is the same as the expected role of the second electronic device.

In this case, the channel management module performs role negotiation to re-determine roles of the first electronic device and the second electronic device, so as to determine the final roles of the two parties. For example, the expected role of the first electronic device may be changed based on whether the expected roles of the first electronic device and the second electronic device are negotiable, to determine the final roles. The following specifically describes three cases.

### Case 2-1: The expected role of the first electronic device is negotiable, and the expected role of the second electronic device is negotiable.

In an example, the expected role of the first electronic device is changed, and the expected role of the second electronic device remains unchanged. In this way, the final role of the first electronic device is a changed expected role, and the final role of the second electronic device is the expected role. As shown in Table 2, for example, if the role information of the first electronic device is "00 (negotiable, T)" and the role information of the second electronic device is "00 (negotiable, T)", the role of the first electronic device changes from "T" to "G", and the role of the second electronic device remains unchanged. For another example, if the role information of the first electronic device is "01 (negotiable, G)" and the role information of the second electronic device is "01 (negotiable, G)", the role of the first electronic device changes from "G" to "T", and the role of the second electronic device remains unchanged.

### Case 2-2: The expected role of the first electronic device is negotiable, and the expected role of the second electronic device is non-negotiable.

In this case, the expected role of the first electronic device is changed, and the expected role of the second electronic device remains unchanged. In this way, the final role of the first electronic device is a changed expected role, and the final role of the second electronic device is the expected role. As shown in Table 2, for example, if the role information of the first electronic device is "00 (negotiable, T)" and the role information of the second electronic device is "10 (non-negotiable, T)", the role of the first electronic device changes from "T" to "G", and the role of the second electronic device remains unchanged and continues to be "T". For another example, if the role information of the first electronic device is "01 (negotiable, G)" and the role information of the second electronic device is "11 (non-negotiable, G)", the role of the first electronic device changes from "G" to "T", and the role of the second electronic device remains unchanged and continues to be "G".

### Case 2-3: Both the expected role of the first electronic device and the expected role of the second electronic device are non-negotiable.

In this case, because the roles of both parties are non-negotiable, access fails, and S426 and S427 may be directly performed to send a first request response to the second electronic device, to indicate that access fails. As shown in Table 2, for example, the role information of the first electronic device is "10 (non-negotiable, T)" and the role information of the second electronic device is "10 (non-negotiable, T)". For another example, the role information of the first electronic device is "11 (non-negotiable, G)" and the role information of the second electronic device is "11 (non-negotiable, G)".

Optionally, in S423, the channel management module of the first electronic device sends a third access request to the basic application layer, to request the first electronic device to access the second electronic device.

For example, when the notification event in S411 includes the role information of the first electronic device, the third access request includes information indicating the final role of the first electronic device and the final role of the second electronic device, so that after the roles of the two electronic devices change, the basic application layer can learn of the final roles, thereby facilitating role maintenance.

Optionally, in S424, the basic application layer of the first electronic device performs capability determining based on the third access request, to determine whether to agree access of the first electronic device to the second electronic device.

In some embodiments, it may be determined, based on a quantity of electronic devices that can be currently connected to the first electronic device, whether to agree access of the first electronic device to the second electronic device. It should be understood that "currently" herein represents time at which the second electronic device requests the first electronic device to access the second electronic device.

If the quantity of electronic devices that can be currently connected to the first electronic device is greater than or equal to 1, it indicates that the first electronic device is capable of accessing the second electronic device, and access of the first electronic device to the second electronic device may be agreed; or if the quantity of electronic devices that can be currently connected to the first electronic device is 0, it indicates that the first electronic device is incapable of accessing the second electronic device, and access of the first electronic device to the second electronic device is not agreed.

For example, a quantity of electronic devices that can be connected to the first electronic device is M, where M is an integer greater than or equal to 1. When the second electronic device requests the first electronic device to access the second electronic device, if the first electronic device is maintaining a connection to M electronic devices, it means that the quantity of electronic devices that can be currently connected to the first electronic device is 0, the first electronic device is temporarily incapable of accessing the second electronic device to establish a connection, and access of the first electronic device to the second electronic device is not agreed; or if the first electronic device is maintaining a connection to fewer than M electronic devices, it means that the quantity of electronic devices that can be currently connected to the first electronic device is greater than or equal to 1, the first electronic device is capable of accessing the second electronic device, and access of the first electronic device to the second electronic device is agreed.

In some other embodiments, it may be determined, based on a user operation, whether to agree access of the first electronic device to the second electronic device.

For example, after receiving the third access request, the basic application layer reports the third access request to an app (for example, settings), and the app displays a request used to request the first electronic device to access the second electronic device. If the user rejects the request, it indicates that the first electronic device is incapable of accessing the second electronic device, and access of the first electronic device to the second electronic device is not agreed. If the user accepts the request, it indicates that the first electronic device is capable of accessing the second electronic device, and access of the first electronic device to the second electronic device is agreed.

Optionally, in S425, the basic application layer of the first electronic device sends a third request response in response to the third access request to the channel management module, where the third request response indicates that access of the first electronic device to the second electronic device is agreed.

In some embodiments, if it is determined in S424 that access of the first electronic device to the second electronic device is agreed, the third request response indicates that access of the first electronic device to the second electronic device is agreed.

In some other embodiments, if it is determined in S424 that access of the first electronic device to the second electronic device is not agreed, the third request response indicates that access of the first electronic device to the second electronic device is not agreed.

Optionally, when access of the first electronic device to the second electronic device is not agreed, the third request response may further indicate a reason why access of the first electronic device to the second electronic device is not agreed. The reason may be shown based on a capability determining condition. For example, if capability determining is performed in S424 based on the quantity of electronic devices that can be currently connected to the first electronic device, the reason may be that a resource of the first electronic device is limited; or if capability determining is performed in S424 based on the user operation, the reason may be that the user rejects.

S426: The channel management module of the first electronic device sends a second request response to the controller, where the second request response indicates whether access of the first electronic device to the second electronic device is agreed.

In some embodiments, the channel management module may finally determine, based on the third request response sent in S425 and the process of determining the final roles of the two parties in S423 to S425, whether access of the first electronic device to the second electronic device is agreed, and send, to the controller, the second request response indicating whether access of the first electronic device to the second electronic device is agreed.

In an example, the third request response indicates that the first electronic device agrees to access the second electronic device and the channel management module successfully determines the final roles of the two parties. This means that the first electronic device can access the second electronic device. Therefore, the second request response indicates that access of the first electronic device to the second electronic device is agreed.

In another example, the third request response indicates that the first electronic device does not agree to access the second electronic device and the channel management module successfully determines the final roles of the two parties. This means that the first electronic device cannot access the second electronic device. Therefore, the second request response indicates that access of the first electronic device to the second electronic device is not agreed.

Optionally, when the second request response indicates that access of the first electronic device to the second electronic device is not agreed, the second request response may further indicate a reason why access to the second electronic device is not agreed. The reason may be determined based on an actual situation. For example, the reason may be either of a resource limitation of the first electronic device and a user rejection.

It should be noted that, when the channel management module fails to determine the final roles of the two parties in S422, the first electronic device may directly perform S426 and S427, the procedure ends, and S423 and S424 are not performed.

In some other embodiments, the channel management module may determine, based only on the final roles of the two parties determined in S422, whether access of the first electronic device to the second electronic device is agreed. If the channel management module successfully determines the final roles of the two parties, the second request response indicates that access of the first electronic device to the second electronic device is agreed; or if the channel management module fails to determine the final roles of the two parties, the second request response indicates that access of the first electronic device to the second electronic device is not agreed.

S427: The controller of the first electronic device sends a first request response in response to the first access request to the second electronic device, where the first request response indicates whether access of the first electronic device to the second electronic device is agreed.

The controller determines and sends the first request response based on the second request response. It should be understood that the first request response has at least a same function as the second request response. However, because the two request responses have different transmit ends and receive ends, formats of the two request responses may be different.

When the first request response indicates that access of the first electronic device to the second electronic device is agreed, S428 and S429 continue to be performed. When the first request response indicates that access of the first electronic device to the second electronic device is not agreed, the process ends.

S428 and S429: The controller of the first electronic device sends a logical channel identifier (LCID) to the channel management module, and the controller of the second electronic device sends a logical channel identifier (LCID) to the channel management module based on received first request response information.

The controller of the first electronic device establishes a logical channel, and after the logical channel is established, sends an LCID of the established logical channel to the channel management module. After receiving the first request response, the controller of the second electronic device establishes a logical channel, and after the logical channel is established, sends an LCID of the established logical channel to the channel management module.

In a process of connecting the control channel in the process 2, an expected G node device (for example, the first electronic device) calculates an LCID, and sends the LCID to a peer device (for example, the second electronic device), so that LCIDs at two ends are consistent. After the controller of the first electronic device receives the second request response or the controller sends the first request response, the controller of the first electronic device establishes the logical channel identified by the LCID, and sends the LCID to the channel management module. After the controller of the second electronic device receives the first request response, the controller of the second electronic device establishes the logical channel identified by the LCID, and sends the LCID to the channel management module.

As described above, a control channel is a channel designed at the basic service layer. A corresponding control channel can be used only after a logical channel is established. In this way, after the logical channel of the first electronic device is established, the channel management module may determine, based on the LCID, a control channel corresponding to the LCID, to use the corresponding control channel. Similarly, after the logical channel of the second electronic device is established, the channel management module may determine a corresponding control channel based on the LCID, to use the corresponding control channel. This implements establishment of a control channel between electronic devices.

In the foregoing, establishment of the control channel between the first electronic device and the second electronic device is implemented by using the process 1 and the process 2.

Optionally, in S430, the channel management module of the first electronic device sends, to the device discovery module, information indicating to stop advertising. In this way, the device discovery module may stop sending the advertising event, so that the first electronic device stops advertising a current event, thereby reducing power consumption.

It should be noted that, when the first information in S413 carries advertising status information, the channel management module may clearly know that the first electronic device is in an advertising state. Therefore, after the control channel is established, the device discovery module is notified to stop advertising, thereby reducing power consumption. Therefore, the information indicating to stop advertising may be understood as information in response to the advertising status information carried in the first information.

Optionally, in S431, the first electronic device and the second electronic device perform authentication encryption of the control channel.

This step may be understood as a security process, and an objective is to ensure secure data transmission to protect user privacy.

In this step, for example, the channel management module of the first electronic device sends a security request to a security management module, where the security request includes the address of the second electronic device. The security management module interacts with the second electronic device based on the security request. The second electronic device and the first electronic device perform authentication encryption on the control channel, to finally generate a key used to encrypt data subsequently. The security management modules of the first electronic device and the second electronic device send, to respective channel management modules, information indicating that authentication encryption is completed.

Optionally, after S431 is performed, the first electronic device and the second electronic device each may use a peer end as a trusted device, and each channel management module stores an address of the peer end. Refer to S436 and S437.

Optionally, in S432 and S433, the channel management module of the first electronic device sends, to the basic application layer, information indicating that the control channel is available, and the channel management module of the second electronic device sends, to the basic application layer, information indicating that the control channel is available. In this way, the basic application layer can determine that the control channel has been successfully established, and may initiate subsequent service channel establishment and data transmission.

It should be noted that, when S431 does not exist, S432 may be performed after 428 or S430, and S433 may be performed after S429.

Optionally, in S434, the first electronic device updates the whitelist, that is, stores the address of the second electronic device in the whitelist, to implement automatic connection when the first electronic device needs to connect to the second electronic device again subsequently.

In an example, after S431 is performed, the channel management module of the first electronic device may send, to the controller, update information indicating to update the whitelist, and the controller stores the address of the second electronic device in the whitelist based on the update information. In this way, the whitelist is updated after authentication encryption is completed, thereby ensuring security.

It should be understood that the step of updating the whitelist by the first electronic device may be further performed in any step after S419. For example, after S428, the controller updates the whitelist after establishment of the control channel of the first electronic device is completed. For another example, in S420, the controller of the first electronic device obtains the address of the second electronic device from the first access request, and stores the address of the second electronic device in the whitelist to update the whitelist.

Optionally, in S435, the second electronic device updates the whitelist, that is, stores the address of the first electronic device in the whitelist, to implement automatic connection when the second electronic device needs to connect to the first electronic device again subsequently.

In an example, after S431 is performed, the channel management module of the second electronic device may send, to the controller, update information indicating to update the whitelist, and the controller stores the address of the first electronic device in the whitelist based on the update information. In this way, the whitelist is updated after authentication encryption is completed, thereby ensuring security.

It should be understood that the step of updating the whitelist by the second electronic device may be further performed in any step after S418. For example, after S429, the controller updates the whitelist after establishment of the control channel of the second electronic device is completed. For another example, in S419, the controller of the second electronic device obtains the address of the first electronic device from the access information, and stores the address of the first electronic device in the whitelist to update the whitelist.

Optionally, in S436, the first electronic device stores attribute information related to the control channel, where the attribute information includes but is not limited to: a key, the address of the second electronic device, a status of the control channel, and the role of the first electronic device.

The key is a key obtained by performing the authentication encryption process in S431. The address of the second electronic device may be obtained from the second access request in S421. If the control channel is not successfully established, the control channel is in a connected state. If the control channel is successfully established, the control channel is in a connected state. If the control channel is being established, the control channel is in a connecting state. The role of the first electronic device represents the final role of the first electronic device.

Optionally, in S437, the second electronic device stores attribute information related to the control channel, where the attribute information includes but is not limited to: a key, the address of the first electronic device, a status of the control channel, and the role of the second electronic device.

The key is a key obtained by performing the authentication encryption process in S431. The address of the first electronic device may be obtained from the second information in S418. If the control channel is not successfully established, the control channel is in a connected state. If the control channel is successfully established, the control channel is in a connected state. If the control channel is being established, the control channel is in a connecting state. The role of the second electronic device represents the final role of the second electronic device.

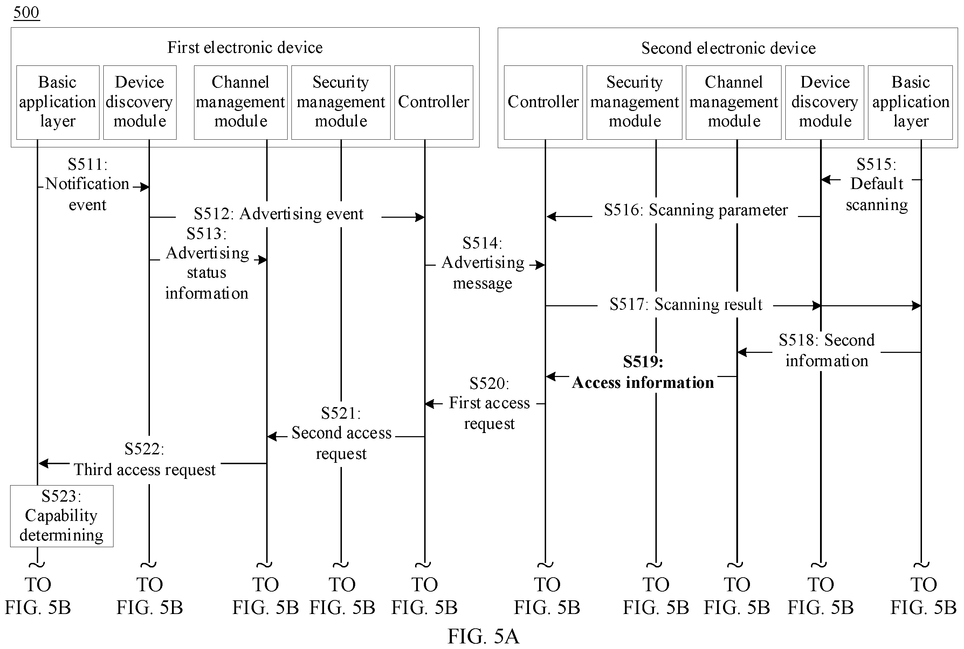

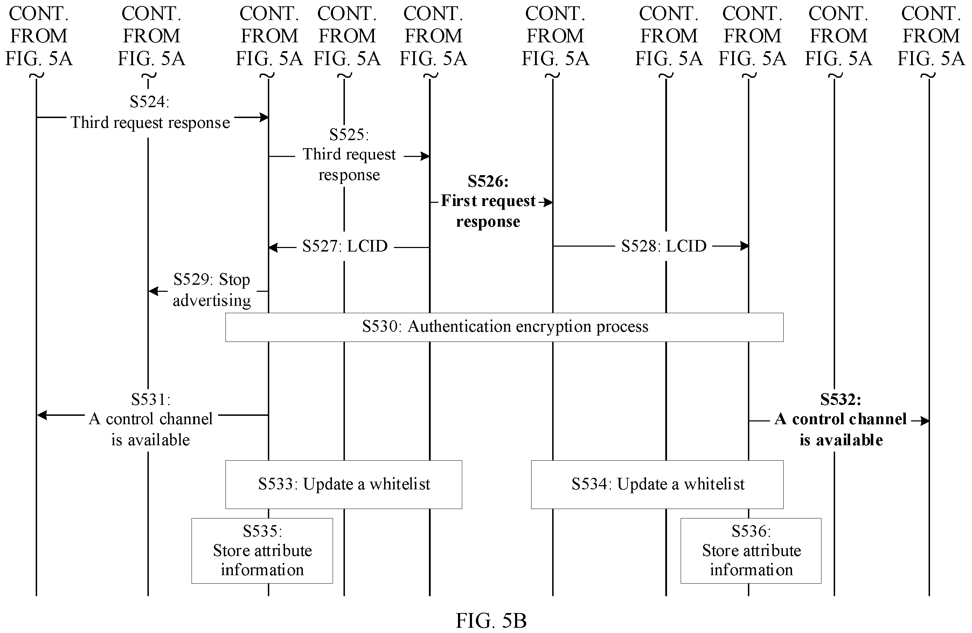

FIG. 5A and FIG. 5B are a schematic flowchart of a device connection method 500 according to an embodiment of this application. The method 500 describes a process in which a first electronic device and a second electronic device establish a control channel based on SLB to implement initial connection. An in-vehicle device is used as an example. An in-vehicle central control console is a G node device, and a device such as a mobile phone, a camera, an in-vehicle speaker, or a rear view mirror in a vehicle may be a T node device. For example, the first electronic device may be an in-vehicle central control console, and the second electronic device may be a device such as a mobile phone, a camera, an in-vehicle speaker, or a rear view mirror in a vehicle.

A process of the method 500 is similar to that of the method 400, and also includes the foregoing process 1 and process 2. Specific steps of the processes are different.

### Process 1: The first electronic device sends an advertising message, and the second electronic device performs a related operation based on the advertising message.

S511: A basic application layer of the first electronic device sends a notification event to a device discovery module at a basic service layer, where the notification event is used to determine that an access technology used for communication between the first electronic device and another electronic device is SLB.

In some embodiments, the notification event includes information indicating an operation performed by a user on the first electronic device. For SLB, an example in which the first electronic device is an in-vehicle central control console is used. The operation performed by the user on the first electronic device may be that the user starts the in-vehicle central control console to power on the in-vehicle central control console. In this embodiment, the basic application layer obtains the operation performed by the user on the first electronic device, and sends the operation to the device discovery module at the basic service layer, so that the device discovery module determines the access technology used for communication between the first electronic device and another electronic device.

In some other embodiments, the notification event includes information indicating that the access technology is SLB. In this embodiment, the basic application layer obtains the operation performed by the user on the first electronic device, determines, based on the operation, that an access technology used for communication between the first electronic device and another electronic device is SLB.

S512: The device discovery module of the first electronic device configures an advertising event and sends the advertising event to a controller, where the advertising event includes a parameter for advertising.

Optionally, the advertising event further includes device filtering information indicating a device that requests to access the first electronic device. For initial connection, the device filtering information indicates that the first electronic device is allowed to access a device within or outside a whitelist of the first electronic device, that is, the first electronic device is allowed to access all devices that request to access the first electronic device. The device in the whitelist of the first electronic device is a device that was connected to the first electronic device.

For specific descriptions of the advertising event, refer to the related descriptions in S412. Details are not described again.

S513: The device discovery module of the first electronic device sends, to a channel management module based on the notification event, advertising status information indicating an advertising status of the first electronic device. For specific descriptions of the advertising status information, refer to the related descriptions in S413. Details are not described again.

S514: The controller of the first electronic device sends the advertising message based on the advertising event.

The controller determines the advertising message based on the advertising event received in S512, and sends the advertising message, where the advertising message includes but is not limited to a system message and address information of the first electronic device.

The system message is used by a peer device (for example, the second electronic device) to perform resource allocation, and includes but is not limited to: a sending period of the system message (domainSysInforPeriod), a quantity of consecutive superframes of the system message in one sending period (domainSysInforOnDuartion), a non-contention access resource (non-contention access resource), a contention access resource (contention access resource), and a type of a device allowed to access (for example, an in-vehicle device).

It should be understood that a format of the advertising message in S514 is a format of an advertising message corresponding to SLB.

It should be noted that S512 may be performed before or after S513, or may be performed simultaneously with S513, and S514 may be performed before or after S513, or may be performed simultaneously with S513.

S515: A basic application layer of the second electronic device sends scanning mode information to a device discovery module, where the scanning mode information indicates that a scanning mode of the second electronic device is a default scanning mode.

S516: The device discovery module of the second electronic device configures a scanning parameter and sends the scanning parameter to a controller based on the default scanning mode.

For specific descriptions of S515 and S516, refer to the related descriptions of S415 and S416. Details are not described again.

S517: The controller of the second electronic device scans a surrounding device based on the scanning parameter, obtains the advertising message of the first electronic device through scanning, obtains a scanning result based on the advertising message, and sends the scanning result to the basic application layer through the device discovery module, that is, the controller sends the scanning result to the device discovery module, and the device discovery module sends the scanning result to the basic application layer. The scanning result includes the address information of the first electronic device that is obtained from the advertising message.

It should be understood that, because the advertising message of the first electronic device is in a format corresponding to SLB, only when the second electronic device supports SLB, the second electronic device can successfully parse the advertising message sent by the first electronic device and can successfully perform S517.

If the second electronic device does not support SLB, S517 cannot be performed, connection between the two electronic devices fails, and the entire process ends.

S518: The basic application layer of the second electronic device sends second information to a channel management module based on the scanning result.

In some embodiments, the second information may be the scanning result in S517, that is, the second information includes the address information of the first electronic device. Optionally, the second information may further include that an access technology used for communication between the second electronic device and the first electronic device is SLB.

During implementation, the basic application layer may send the second information to the channel management module based on a user operation and the scanning result obtained in S517. For specific descriptions, refer to the related descriptions of S418. Details are not described again.

### Process 2: The first electronic device and the second electronic device establish the control channel.

S519: The channel management module of the second electronic device sends the access information to the controller based on the second information.

The channel management module determines the access information based on the second information, and sends the access information to the controller.

For SLB, the access information includes the address information of the first electronic device, and the address information of the first electronic device is obtained from the second information.

Optionally, the access information further includes address information of the second electronic device. The address information of the second electronic device may be finally sent to the first electronic device, so that after the two electronic devices are successfully connected, the first electronic device updates a whitelist (refer to S533), and after the two electronic devices complete authentication encryption, the first electronic device stores an address of the second electronic device, to use the second electronic device as a trusted device (refer to S535).

Optionally, the access information may further include information indicating the second electronic device to ignore a whitelist of the second electronic device. For specific descriptions of the information, refer to the related descriptions of S419. Details are not described again.

S520: The controller of the second electronic device sends a first access request to the first electronic device based on the access information, where the first access request is used to request the first electronic device to access the second electronic device.

Correspondingly, the controller of the first electronic device receives the first access request. In addition, the controller sends the first access request based on the access information, where the first access request includes the address information of the first electronic device.

Optionally, the first access request further includes the address information of the second electronic device, so that after the first electronic device and the second electronic device are successfully connected, the first electronic device updates the whitelist (refer to S533), and after the two electronic devices complete authentication encryption, the first electronic device stores the address of the second electronic device, to use the second electronic device as a trusted device (refer to S535). The address information of the second electronic device may be obtained from the access information in S519.

After receiving the first access request, the first electronic device performs a related operation (S521 to S527) based on the first access request, to determine whether to agree to access the second electronic device, so as to establish a connection to the second electronic device, and implement establishment of the control channel when the first electronic device agrees to access the second electronic device.

S521: The controller of the first electronic device sends a second access request to the channel management module, to request the first electronic device to access the second electronic device.

Optionally, the second access request includes the address information of the second electronic device, so that after an authentication encryption process is completed, the channel management module may locally store an address indicated by the address information, to use the second electronic device as a trusted device. For details, refer to S535. The address information of the second electronic device may be obtained from the first access request in S520.

S522: The channel management module of the first electronic device sends a third access request to the basic application layer.

S523: The basic application layer of the first electronic device performs capability determining based on the third access request, to determine whether to agree access of the first electronic device to the second electronic device. For specific descriptions, refer to the related descriptions of S424. Details are not described herein again.

S524: The basic application layer of the first electronic device sends a third request response to the channel management module, where the third request response indicates whether access of the first electronic device to the second electronic device is agreed. For specific descriptions, refer to the related descriptions of S425. Details are not described herein again.

S525: The channel management module of the first electronic device sends a second request response to the controller, where the second request response indicates whether access of the first electronic device to the second electronic device is agreed.

If the third request response indicates that access of the first electronic device to the second electronic device is agreed, the second request response indicates that access of the first electronic device to the second electronic device is agreed; or if the third request response indicates that access of the first electronic device to the second electronic device is not agreed, the second request response indicates that access of the first electronic device to the second electronic device is not agreed. It should be understood that the second request response has at least a same function as the first request response. However, because the two request responses have different transmit ends and receive ends, formats of the two request responses may be different.

Optionally, when the second request response indicates that access of the first electronic device to the second electronic device is not agreed, the second request response may further indicate a reason why access to the second electronic device is not agreed. The reason may be determined based on an actual situation. For example, the reason may be a resource limitation of the first electronic device, a user rejection, or the like.

S526: The controller of the first electronic device sends a first request response in response to the first access request to the second electronic device, where the first request response indicates whether access of the first electronic device to the second electronic device is agreed.

The controller determines and sends the first request response based on the second request response. It should be understood that the first request response has at least a same function as the second request response. However, because the two request responses have different transmit ends and receive ends, formats of the two request responses may be different.

When the first request response indicates that access of the first electronic device to the second electronic device is agreed, S527 and S528 continue to be performed. When the first request response indicates that access of the first electronic device to the second electronic device is not agreed, the process ends.

S527 and S528: The controller of the first electronic device sends an LCID to the channel management module, and the controller of the second electronic device sends an LCID to the channel management module. For specific descriptions, refer to the related descriptions of S428 and S429. Details are not described again.

In the foregoing, establishment of the control channel between the first electronic device and the second electronic device is implemented by using the process 1 and the process 2.

Optionally, in S529, the channel management module of the first electronic device sends, to the device discovery module, information indicating to stop advertising. For specific descriptions, refer to the related descriptions of S430. Details are not described again.

Optionally, in S530, the first electronic device and the second electronic device perform authentication encryption of the control channel. For specific descriptions, refer to the related descriptions of S431. Details are not described again.

Optionally, in S531 and S532, the channel management module of the first electronic device sends, to the basic application layer, information indicating that the control channel is available, and the channel management module of the second electronic device sends, to the basic application layer, information indicating that the control channel is available. For specific descriptions, refer to the related descriptions of S432 and S433. Details are not described again.

Optionally, in S533, the first electronic device updates the whitelist. Optionally, in S534, the second electronic device updates the whitelist. For specific descriptions, refer to the related descriptions of S434 and S435. Details are not described again.

Optionally, in S535, the first electronic device stores attribute information related to the control channel, where the attribute information includes but is not limited to: a key, the address of the second electronic device, and a status of the control channel. For specific descriptions, refer to the related descriptions of S436. Details are not described herein again.

Optionally, in S536, the second electronic device stores attribute information related to the control channel, where the attribute information includes but is not limited to: a key, the address of the first electronic device, and a status of the control channel. For specific descriptions, refer to the related descriptions of S437. Details are not described herein again.

### Scenario 2: automatic connection between electronic devices

In this scenario, automatic connection between electronic devices is described, and a device stored in a whitelist is mainly connected. For example, a headset and a mobile phone are used as an example. The headset and the mobile phone were connected before. When a charging case is opened subsequently, the headset can be automatically connected to the mobile phone. A main difference between an embodiment of this scenario and the initial connection in the scenario 1 lies in that a second electronic device is configured to be in an automatic connection scanning mode, and after finding a device in a whitelist through scanning, a controller of the second electronic device does not need to report a scanning result to an upper layer, but may directly initiate an access request; and the second electronic device may be configured to be in a single-device connection mode and a multi-device connection mode.

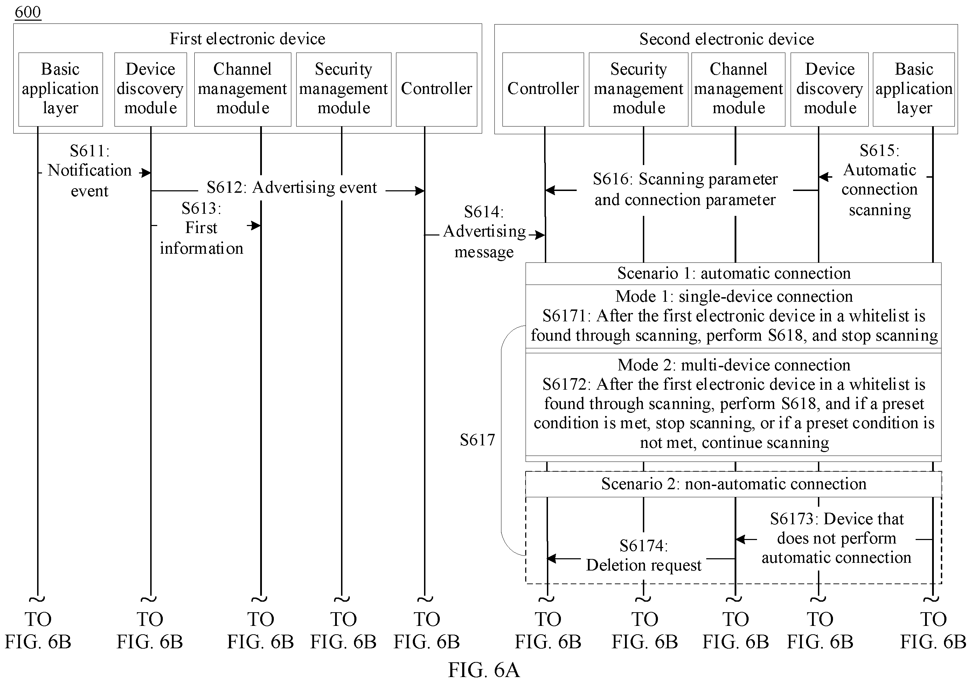

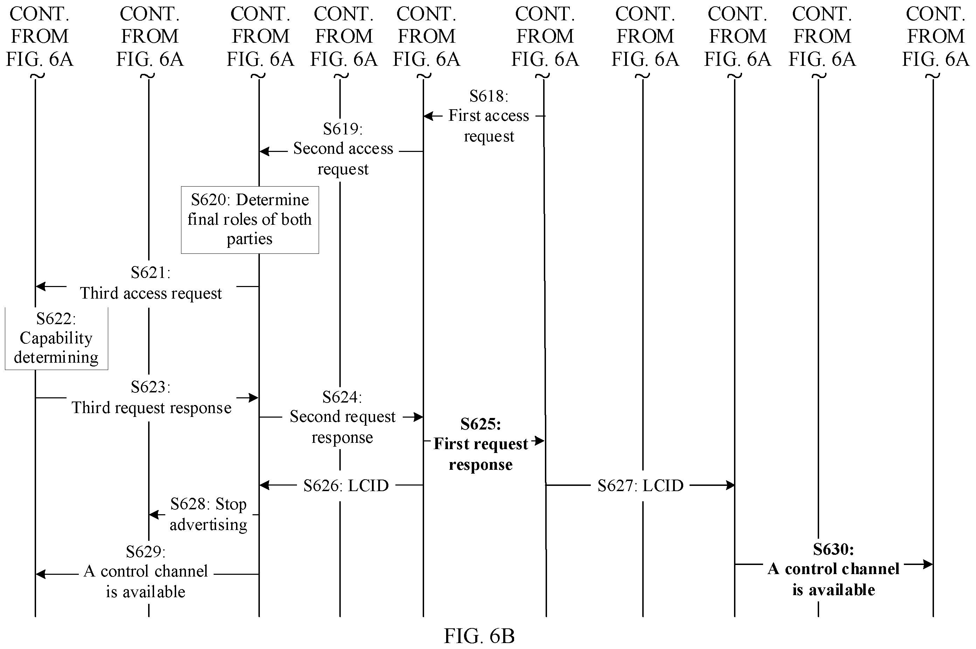

FIG. 6A and FIG. 6B are a schematic flowchart of a device connection method 600 according to an embodiment of this application. The method 600 describes a process in which a first electronic device and a second electronic device establish a control channel based on SLE. For example, the first electronic device may be a headset, and the second electronic device may be a mobile phone.

A process of the method 600 is similar to that of the method 400, and includes the foregoing process 1 and process 2 in the method 400. Specific steps of the processes are different.

### Process 1: The first electronic device sends an advertising message, and the second electronic device performs a related operation based on the advertising message.

S611: A basic application layer of the first electronic device sends a notification event to a device discovery module at a basic service layer, where the notification event is used to determine role information of the first electronic device.

For specific descriptions of the role information of the first electronic device, refer to the related descriptions of S411. Details are not described again.

In some embodiments, the notification event includes information indicating an operation performed by a user on the first electronic device. For an SLE technology, if the first electronic device is a headset, for example, the operation performed by the user on the first electronic device may be opening a charging case or long-pressing a button; if the first electronic device is a mobile phone, for example, the operation performed by the user on the first electronic device may be enabling SLE in settings; or if the first electronic device is a keyboard, for example, the operation performed by the user on the first electronic device may be pressing a physical switch used for connection. In this embodiment, the basic application layer obtains the operation performed by the user on the first electronic device, and sends the operation to the device discovery module at the basic service layer, so that the device discovery module determines that an access technology used for communication between the first electronic device and another electronic device is SLE, and determines the role information of the first electronic device.

In some other embodiments, the notification event includes information indicating that the access technology is SLE. In this embodiment, the basic application layer obtains the operation performed by the user on the first electronic device, and determines, based on the operation, that an access technology used for communication between the first electronic device and another electronic device is SLE, so that the device discovery module determines the role information of the first electronic device.

In some other embodiments, the notification event includes the role information of the first electronic device. In this embodiment, the basic application layer obtains the operation performed by the user on the first electronic device, determines, based on the operation, that an access technology used for communication between the first electronic device and another electronic device is SLE, and determines the role information of the first electronic device.

S612: The device discovery module of the first electronic device configures an advertising event and sends the advertising event to a controller, where the advertising event indicates an advertising policy and includes another parameter for advertising. For specific descriptions, refer to the related descriptions of S412 above. Details are not described herein again.

Optionally, the advertising event further includes the role information of the first electronic device.

Optionally, the advertising event further includes device filtering information indicating a device that requests to access the first electronic device. For automatic connection, the device filtering information indicates that the first electronic device is allowed to access only a device within a whitelist of the first electronic device, to implement an automatic connection process between the first electronic device and an electronic device (for example, the second electronic device) that was connected to the first electronic device.

S613: The device discovery module of the first electronic device sends first information to a channel management module based on the notification event. For specific descriptions, refer to the related descriptions of S413. Details are not described herein again.

S614: The controller of the first electronic device sends the advertising message based on the advertising event.

The advertising message includes but is not limited to the following content: address information of the first electronic device, the role information of the first electronic device, an advertising mode (adv mode), and an advertising flag (adv flag). For specific descriptions, refer to the related descriptions of S414. Details are not described herein again.

Optionally, the advertising message may further include address information of the second electronic device, so that the first electronic device may automatically connect to the second electronic device. In this way, automatic connection between the first electronic device and a specific device can be implemented.

The address information of the second electronic device may be obtained from the whitelist of the first electronic device.

It should be noted that S612 may be performed before or after S613, or may be performed simultaneously with S613, and S614 may be performed before or after S613, or may be performed simultaneously with S613.

S615: A basic application layer of the second electronic device sends scanning mode information to a device discovery module, where the scanning mode information indicates that a scanning mode of the second electronic device is an automatic connection scanning mode.

The automatic connection scanning mode requires that a surrounding device be scanned or some devices be filtered out under a specific constraint condition.

For example, the basic application layer may set the first electronic device to the automatic connection scanning mode based on the following various trigger conditions: After the first electronic device and the second electronic device are disconnected due to a long distance or the like, it is agreed to switch to automatic scanning within preset duration after the disconnection; or switching is periodically performed between the automatic connection scanning mode and a default scanning mode; or
the user manually taps, in an application interface of the second electronic device, a device that was connected before, so that the basic application layer triggers automatic connection scanning.

S616: The device discovery module of the second electronic device configures a scanning parameter and a connection parameter and sends the scanning parameter and the connection parameter to a controller based on the automatic connection scanning mode.

For specific descriptions of the scanning parameter, refer to the related descriptions of S416. Details are not described again.

For SLE, the connection parameter includes but is not limited to the following content: role information of the second electronic device, a connection mode, and enabling a whitelist.

The role information of the second electronic device may be determined based on a role expected by the second electronic device, and indicates that the expected role of the second electronic device is a G node device or a T node device. Optionally, the role information of the second electronic device further indicates whether the role of the second electronic device is negotiable, to determine a final role of the second electronic device.

The connection mode is a single-device connection mode or a multi-device connection mode. The single-device connection mode indicates that the second electronic device can establish a connection to only one device in a same time period, and the multi-device connection mode indicates that the second electronic device can simultaneously establish a connection to a plurality of devices in a same time period. In an example, the single-device connection mode or the multi-device connection mode is indicated by using a maximum quantity of devices that can be connected to the second electronic device. If the maximum quantity of devices that can be connected to the second electronic device is 1, it indicates the single-device connection mode. If the maximum quantity of devices that can be connected to the second electronic device is greater than 1, it indicates the multi-device connection mode. In another example, when the connection mode is the multi-device connection mode, the connection parameter not only includes the connection mode, but also indicates a maximum quantity of devices that can be connected to the second electronic device.

Enabling the whitelist means enabling the controller of the second electronic device to use the whitelist. An objective is to enable the second electronic device to connect to a device within the whitelist of the second electronic device to implement automatic connection, and enable the controller to directly initiate an access request without reporting a scanning result to an upper layer after finding a device within the whitelist through scanning.

When the second electronic device supports only one connection mode, the connection parameter may not include the connection mode, and the second electronic device performs connection by default based on the connection mode supported by the second electronic device. SLE may support two connection modes. SLB may support only the single-device connection mode.

Optionally, the connection parameter may further include at least one of the following content: information indicating a sending period (interval) and information indicating response duration (timeout). For specific descriptions, refer to the related descriptions of S419. Details are not described herein again.

It should be noted that, there is no fixed sequence for performing S615 and S616 and S611 to S614, and the sequence may be randomly changed, provided that S615 and S616 are performed before S617. For example, S615 and S616 may be performed before, after, or simultaneously with S611 to S614. For another example, S615 and S616 may be performed before, after, or simultaneously with any step in S611 to S614.

S617: Perform different operations in a scenario 1 and a scenario 2.

### Scenario 1: automatic connection

S6171: When the connection mode is the single-device connection mode, the controller of the second electronic device scans a surrounding device based on the scanning parameter and the connection parameter, and after finding the first electronic device within the whitelist of the second electronic device through scanning, directly performs S618 (that is, sends a first access request), and stops scanning.

S6172: When the connection mode is the multi-device connection mode, the controller of the second electronic device scans a surrounding device based on the scanning parameter and the connection parameter, and after finding the first electronic device within the whitelist of the second electronic device through scanning, performs S618, and if a preset condition is met, stops scanning, or if a preset condition is not met, continues scanning.

In an example, the preset condition may be that a scanning timer expires.

In this example, the controller may determine, based on duration of the scanning timer, whether to stop scanning. Specifically, if the scanning timer in the controller of the second electronic device expires, scanning is stopped; otherwise, if the scanning timer in the controller of the second electronic device does not expire, scanning is continued.

In another example, the preset condition may be that the first electronic device is an N^{th} device found by the controller through scanning, and N devices that are found by the controller through scanning and that include the first electronic device are devices within the whitelist of the second electronic device.

In this example, the controller may determine, based on a maximum quantity N of devices that can be connected to the second electronic device and that belong to the whitelist, whether to stop scanning, where N is an integer greater than 1. That is, if a quantity of devices that are found by the controller through scanning and that are in the whitelist reaches the maximum quantity N of devices that can be connected to the second electronic device, the controller stops scanning; otherwise, if a quantity of devices that are found by the controller through scanning and that are in the whitelist does not reach the maximum quantity N of devices that can be connected to the second electronic device, the controller continues scanning.

Specifically, if the first electronic device found by the controller through scanning is the N^{th} electronic device found by the controller through scanning, the controller has found N devices in the whitelist through scanning, that is, N-1 devices previously found by the controller through scanning and the first electronic device currently found through scanning, and the maximum quantity N is reached. If disconnection of another device is not considered, it means that the second electronic device is likely to maintain a connection to the N devices at the same time, and the controller stops scanning. If the first electronic device found by the controller through scanning is not the N^{th} electronic device, based on a device previously found by the controller through scanning and the first electronic device currently found through scanning, the controller has not found N devices in the whitelist through scanning, and the maximum quantity N is not reached. In this case, the controller continues scanning.

In another example, the preset condition may be that the first electronic device is an N^{th} device found by the controller through scanning, the second electronic device completes establishment of the control channel, and N devices that are found by the controller through scanning and that include the first electronic device are devices within the whitelist of the second electronic device.

It should be noted that, after the controller of the second electronic device completes establishment of a logical channel and sends an LCID to the channel management module, that is, after the controller completes S627, it indicates that the second electronic device completes establishment of the control channel. Explanations of "the second electronic device completes establishment of the control channel" below are the same as those herein. Therefore, another expression of the foregoing preset condition may be that the first electronic device is an N^{th} device found by the controller through scanning, and the controller of the second electronic device completes sending an LCID to the channel management module (or the basic service layer).

In this example, the controller determines, based on the maximum quantity N of devices that can be connected to the second electronic device and that belong to the whitelist and whether the second electronic device completes establishment of the control channel, whether to stop scanning. That is, if a quantity of devices that are found by the controller through scanning and that are in the whitelist reaches the maximum quantity N of devices that can be connected to the second electronic device, and the second electronic device completes establishment of the control channel, scanning is stopped. On the contrary, if a quantity of devices that are found by the controller through scanning and that are in the whitelist reaches the maximum quantity N of devices that can be connected to the second electronic device, but the second electronic device does not complete establishment of the control channel, scanning is continued; or if a quantity of devices that are found by the controller through scanning and that are in the whitelist does not reach the maximum quantity N of devices that can be connected to the second electronic device, scanning is continued.

Specifically, if the first electronic device found by the controller through scanning is the N^{th} electronic device found by the controller through scanning, the controller has found N devices in the whitelist through scanning, and the maximum quantity N is reached. In addition, the second electronic device completes establishment of the control channel, and this means that the second electronic device is successfully connected to the first electronic device. If disconnection of another device is not considered, it is further ensured that the second electronic device is likely to maintain a connection to the N devices at the same time. In this case, the controller stops scanning. If the first electronic device found by the controller through scanning is the N^{th} electronic device found by the controller through scanning, it indicates that the controller has found N devices in the whitelist through scanning, and the maximum quantity N is reached. However, the second electronic device does not complete establishment of the control channel, that is, establishment of the control channel fails, and this means that the second electronic device is not successfully connected to the first electronic device. If disconnection of another device is not considered, the second electronic device is actually connected to N-1 devices, and the maximum quantity N is not reached. In this case, the controller continues scanning. If the first electronic device found by the controller through scanning is not the N^{th} electronic device, the controller continues scanning.

In another example, the preset condition may be that when a scanning timer of the controller does not expire, the first electronic device is an N^{th} device found by the controller through scanning, and N devices that are found by the controller through scanning and that include the first electronic device are devices within the whitelist of the second electronic device.

In this example, when the scanning timer does not expire, the controller may determine, based on a maximum quantity N of devices that can be connected to the second electronic device and that belong to the whitelist, whether to stop scanning. That is, if the scanning timer in the controller does not expire, and a quantity of devices that are found by the controller through scanning and that are in the whitelist reaches the maximum quantity N of devices that can be connected to the second electronic device, the controller stops scanning; otherwise, if the scanning timer in the controller does not expire, but a quantity of devices that are found by the controller through scanning and that are in the whitelist does not reach the maximum quantity N of devices that can be connected to the second electronic device, the controller continues scanning. Certainly, if the scanning timer expires, the controller also stops scanning.

Specifically, if the scanning timer in the controller does not expire, and the first electronic device found by the controller through scanning is the N^{th} electronic device found by the controller through scanning, the controller has found N devices in the whitelist through scanning, and the maximum quantity N is reached. If disconnection of another device is not considered, it means that the second electronic device is likely to maintain a connection to the N devices at the same time, and the controller stops scanning. If the scanning timer in the controller does not expire, and the first electronic device found through scanning is not the N^{th} electronic device, the controller has not found N devices in the whitelist through scanning, and the maximum quantity N is not reached. In this case, the controller continues scanning. If the scanning timer expires, the controller stops scanning.

In another example, the preset condition may be that when a scanning timer of the controller does not expire, the first electronic device is an N^{th} device found by the controller through scanning, and the second electronic device completes establishment of the control channel (completes S627).

In this example, when the scanning timer does not expire, the controller may determine, based on the maximum quantity N of devices that can be connected to the second electronic device and that belong to the whitelist and whether the second electronic device completes establishment of the control channel, whether to stop scanning.

Specifically, if the scanning timer in the controller does not expire, and the first electronic device found by the controller through scanning is the N^{th} electronic device found by the controller through scanning, the controller has found N devices in the whitelist through scanning, and the maximum quantity N is reached. In addition, the second electronic device completes establishment of the control channel, and this means that the second electronic device is successfully connected to the first electronic device. If disconnection of another device is not considered, it is further ensured that the second electronic device is likely to maintain a connection to the N devices at the same time. In this case, the controller stops scanning. If the scanning timer in the controller does not expire, and the first electronic device found by the controller through scanning is the N^{th} electronic device found by the controller through scanning, the controller has found N devices in the whitelist through scanning, and the maximum quantity N is reached. However, the second electronic device does not complete establishment of the control channel, and this means that the second electronic device is not successfully connected to the first electronic device. If disconnection of another device is not considered, the second electronic device is actually connected to N-1 devices, and the maximum quantity N is not reached. In this case, the controller continues scanning. If the scanning timer in the controller does not expire, and the first electronic device found through scanning is not the N^{th} electronic device, the controller does not find N devices in the whitelist through scanning, and the maximum quantity N is not reached. In this case, the controller continues scanning. If the scanning timer expires, the controller stops scanning.

It should be noted that, when the advertising message includes the address information of the second electronic device, it means that the first electronic device wants to connect to the second electronic device. Therefore, regardless of the single-device connection mode or the multi-device connection mode, the second electronic device performs S618 when receiving the address information of the second electronic device. It should be understood that the address information of the second electronic device is obtained from the whitelist of the first electronic device, and this indicates that the first electronic device and the second electronic device were connected before. Therefore, the first electronic device is also a device in the whitelist of the second electronic device.

### Scenario 2: non-automatic connection

In this scenario, a user usually specifies that the second electronic device cannot implement automatic connection even if the second electronic device can perform automatic connection. For example, the user of the second electronic device previously uses a device of another user, and therefore, the user sets the device of the another user to non-automatic connection.

S6173: The basic application layer of the second electronic device sends device information to the channel management module based on a user setting, where the device information indicates a device that is not automatically connected. For example, the user may set, in an application interface, a device that is not automatically connected.

S6174: The channel management module of the second electronic device sends a deletion request to the controller, where the deletion request includes the device information indicating the device that is not automatically connected, and the controller deletes, based on the device information in the deletion request, the device indicated by the device information in the whitelist. In this way, if the device indicated by the device information subsequently needs to be connected to the second electronic device, the embodiment of the method 400 is performed.

**Process 2: The first electronic device and the second electronic device establish the control channel.**

S618: The controller of the second electronic device sends a first access request to the first electronic device, where the first access request is used to request the first electronic device to access the second electronic device.

S619: The controller of the first electronic device sends a second access request to the channel management module based on the first access request, to request the first electronic device to access the second electronic device, where the second access request includes the role information of the second electronic device.

S620: The channel management module of the first electronic device determines the final roles of the first electronic device and the second electronic device.

Optionally, in S621, the channel management module of the first electronic device sends a third access request to the basic application layer, to request the first electronic device to access the second electronic device. Optionally, the third access request includes information indicating a final role of the first electronic device and a final role of the second electronic device.

Optionally, in S622, the basic application layer of the first electronic device performs capability determining based on the third access request, to determine whether to agree access of the first electronic device to the second electronic device.

Optionally, in S623, the basic application layer of the first electronic device sends a third request response in response to the third access request to the channel management module, where the third request response indicates that access of the first electronic device to the second electronic device is agreed.

S624: The channel management module of the first electronic device sends a second request response to the controller, where the second request response indicates whether access of the first electronic device to the second electronic device is agreed.

S625: The controller of the first electronic device sends a first request response in response to the first access request to the second electronic device, where the first request response indicates whether access of the first electronic device to the second electronic device is agreed.

S626 and S627: The controller of the first electronic device sends a logical channel identifier (LCID) to the channel management module, and the controller of the second electronic device sends a logical channel identifier (LCID) to the channel management module.

In the foregoing, establishment of the control channel between the first electronic device and the second electronic device is implemented by using the process 1 and the process 2.

Optionally, in S628, the channel management module of the first electronic device sends, to the device discovery module, information indicating to stop advertising.

Optionally, in S629 and S630, the channel management module of the first electronic device sends, to the basic application layer, information indicating that the control channel is available, and the channel management module of the second electronic device sends, to the basic application layer, information indicating that the control channel is available.

For specific descriptions of S618 to S630, refer to the related descriptions of S420 to S430 and S432 and S433. Details are not described again.

It should be noted that, in an automatic connection scenario, because the first electronic device and the second electronic device were connected, both parties store a key generated in a previous authentication encryption process. Therefore, a key may not need to be regenerated in a subsequent automatic connection process. Certainly, if at least one party loses the key, the authentication encryption process further needs to be performed again.

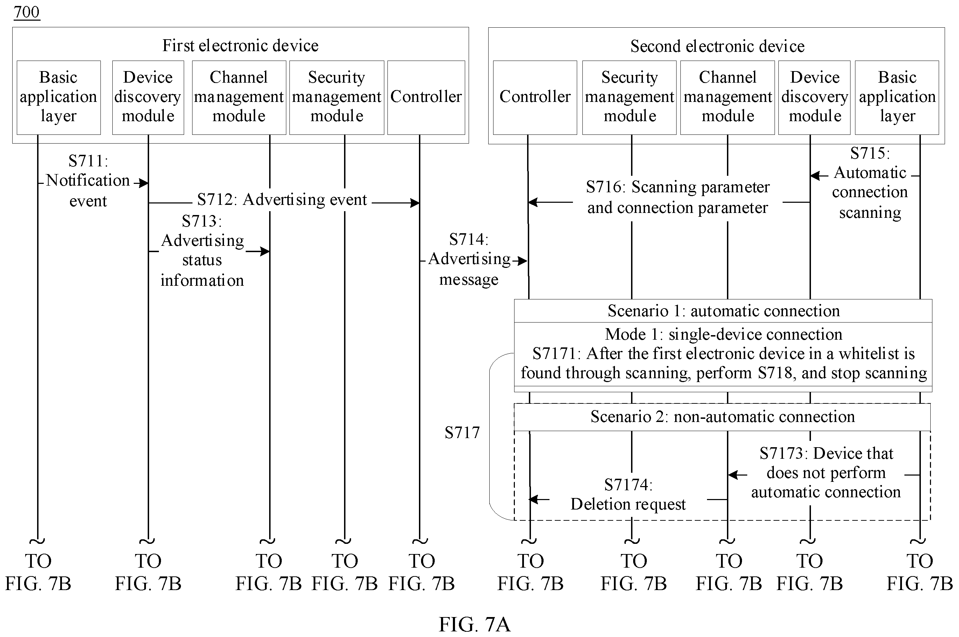

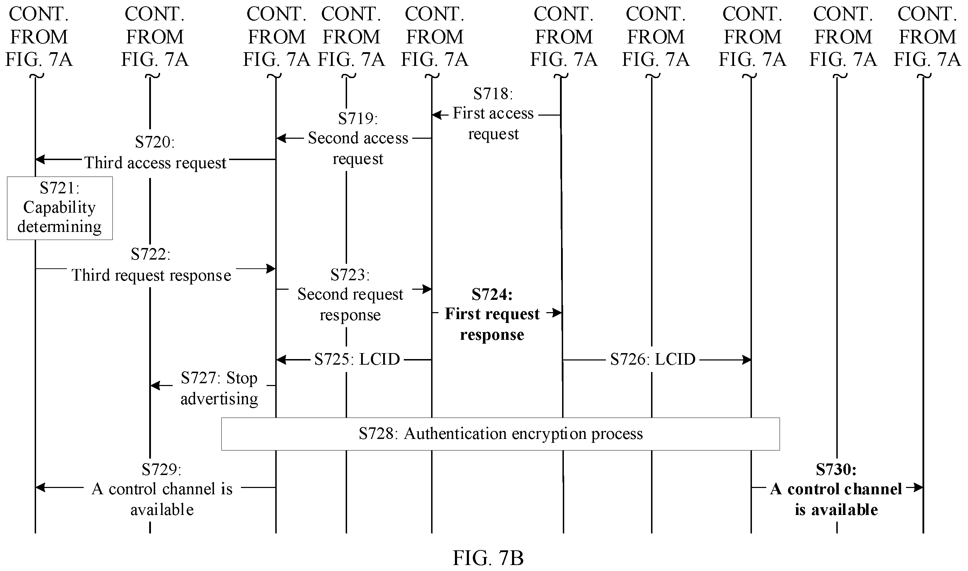

FIG. 7A and FIG. 7B are a schematic flowchart of a device connection method 700 according to an embodiment of this application. The method 700 describes a process in which a first electronic device and a second electronic device establish a control channel based on SLB to implement automatic connection.

A process of the method 700 is similar to that of the method 400, and also includes the foregoing process 1 and process 2. Specific steps of the processes are different.

Process 1: The first electronic device sends an advertising message, and the second electronic device performs a related operation based on the advertising message.

S711: A basic application layer of the first electronic device sends a notification event to a device discovery module at a basic service layer, where the notification event is used to determine an access technology used for communication between the first electronic device and another electronic device. For specific descriptions, refer to the related descriptions of S511. Details are not described herein again.

S712: The device discovery module of the first electronic device configures an advertising event and sends the advertising event to a controller, where the advertising event includes a parameter for advertising. Optionally, the advertising event further includes device filtering information indicating a device that requests to access the first electronic device. For automatic connection, the device filtering information indicates that the first electronic device is allowed to access only a device within a whitelist of the first electronic device. For specific descriptions of the advertising parameter, refer to the related descriptions of S512. Details are not described again.

S713: The device discovery module of the first electronic device sends, to a channel management module based on the notification event, advertising status information indicating an advertising status of the first electronic device. For specific descriptions of the advertising status information, refer to the related descriptions in S513. Details are not described again.

S714: The controller of the first electronic device sends the advertising message based on the advertising event. The advertising message includes a system message, and the system message includes but is not limited to: address information of the first electronic device and resource allocation information.

Optionally, the advertising message may further include address information of the second electronic device, so that the first electronic device may automatically connect to the second electronic device. In this way, automatic connection between the first electronic device and a specific device can be implemented.

The address information of the second electronic device may be obtained from the whitelist of the first electronic device.

It should be noted that S712 may be performed before or after S713, or may be performed simultaneously with S713, and S714 may be performed before or after S713, or may be performed simultaneously with S713.

S715: A basic application layer of the second electronic device sends scanning mode information to a device discovery module, where the scanning mode information indicates that a scanning mode of the second electronic device is an automatic connection scanning mode. For specific descriptions, refer to the related descriptions of S615. Details are not described herein again.

S716: The device discovery module of the second electronic device configures a scanning parameter and a connection parameter and sends the scanning parameter and the connection parameter to a controller based on the automatic connection scanning mode.

For specific descriptions of the scanning parameter, refer to the related descriptions of S416. Details are not described again.

For SLB, the connection parameter includes enabling a whitelist. For specific descriptions of enabling the whitelist, refer to the related descriptions of S616. Details are not described again.

Optionally, the connection parameter further includes a connection mode, and the connection mode is a single-device connection mode.

When SLB supports only the single-device connection mode, the connection parameter may not include the connection mode, and the second electronic device performs connection by default based on the single-device connection mode supported by the second electronic device.

It should be noted that, there is no fixed sequence for performing S715 and S716 and S711 to S714, and the sequence may be randomly changed, provided that S715 and S716 are performed before S717. For example, S715 and S716 may be performed before, after, or simultaneously with S711 to S714. For another example, S715 and S716 may be performed before, after, or simultaneously with any step in S711 to S714.

S717: The second electronic device performs different operations in a scenario 1 and a scenario 2.

### Scenario 1: automatic connection

S7171: When SLB supports only the single-device connection mode, the controller of the second electronic device scans a surrounding device based on the scanning parameter and the connection parameter, and after finding the first electronic device within the whitelist of the second electronic device through scanning, directly performs S718 (that is, sends a first access request), and stops scanning.

### Scenario 2: non-automatic connection

In this scenario, a user usually specifies that the second electronic device cannot implement automatic connection even if the second electronic device can perform automatic connection. For example, the user of the second electronic device previously uses a device of another user, and therefore, the user sets the device of the another user to non-automatic connection.

S7173: The basic application layer of the second electronic device sends device information to the channel management module based on a user setting, where the device information indicates a device that is not automatically connected.

S7174: The channel management module of the second electronic device sends a deletion request to the controller, where the deletion request includes the device information indicating the device that is not automatically connected, and the controller deletes, based on the device information in the deletion request, the device indicated by the device information in the whitelist. In this way, if the device indicated by the device information subsequently needs to be connected to the second electronic device, the embodiment of the method 400 is performed.

**Process 2: The first electronic device and the second electronic device establish the control channel.**

S718: The controller of the second electronic device sends a first access request to the first electronic device based on the access information, where the first access request is used to request the first electronic device to access the second electronic device.

S719: The controller of the first electronic device sends a second access request to the channel management module, to request the first electronic device to access the second electronic device.

S720: The channel management module of the first electronic device sends a third access request to the basic application layer.

S721: The basic application layer of the first electronic device performs capability determining based on the third access request, to determine whether to agree access of the first electronic device to the second electronic device.

S722: The basic application layer of the first electronic device sends a third request response to the channel management module, where the third request response indicates whether access of the first electronic device to the second electronic device is agreed.

S723: The channel management module of the first electronic device sends a second request response to the controller, where the second request response indicates whether access of the first electronic device to the second electronic device is agreed.

S724: The controller of the first electronic device sends a first request response in response to the first access request to the second electronic device, where the first request response indicates whether access of the first electronic device to the second electronic device is agreed.

S725 and S726: The controller of the first electronic device sends an LCID to the channel management module, and the controller of the second electronic device sends an LCID to the channel management module.

In the foregoing, establishment of the control channel between the first electronic device and the second electronic device is implemented by using the process 1 and the process 2.

Optionally, in S727, the channel management module of the first electronic device sends, to the device discovery module, information indicating to stop advertising.

Optionally, in S728, the first electronic device and the second electronic device perform authentication encryption of the control channel.

Optionally, in S729 and S730, the channel management module of the first electronic device sends, to the basic application layer, information indicating that the control channel is available, and the channel management module of the second electronic device sends, to the basic application layer, information indicating that the control channel is available.

For specific descriptions of S718 to S730, refer to the related descriptions of S520 to S532. Details are not described again.

An embodiment of this application further provides a control channel release method. A logical channel is disconnected, so that a control channel cannot be used, thereby releasing the control channel.

In some embodiments, based on a user operation, a channel management module actively initiates a disconnection command used to disconnect a control channel. For two electronic devices that communicate by using SLE, both a G node device and a T node device may actively initiate a disconnection command. For two electronic devices that communicate by using SLB, a G node device initiates a disconnection command.

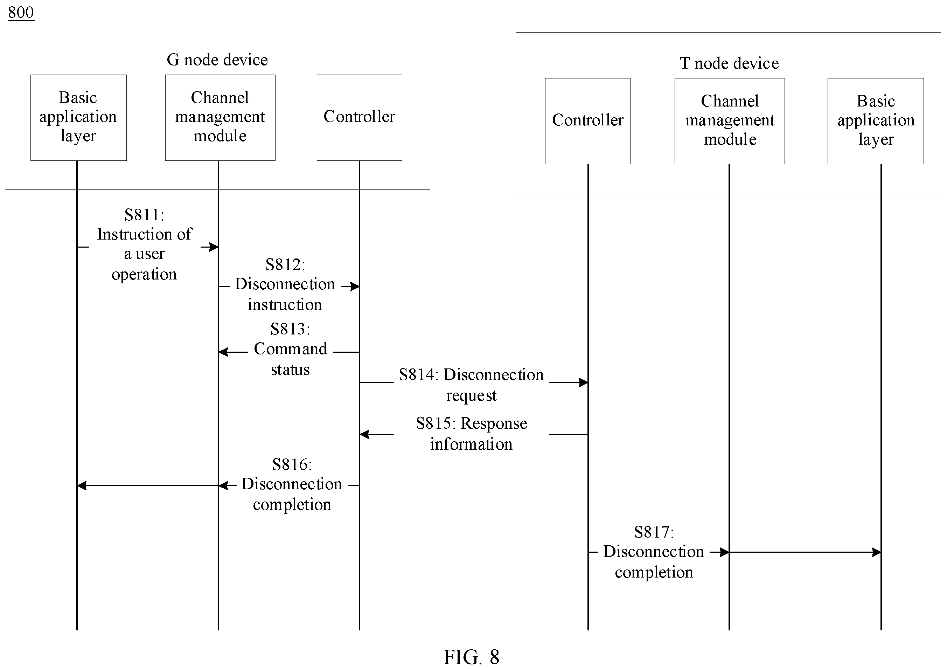

The following describes this embodiment with reference to FIG. 8 by using an example in which a G node device initiates a disconnection command. It should be understood that a G node device and a T node device in FIG. 8 may support SLE, or may support SLB. It should be further understood that a process in which a T node device in two electronic devices that perform communication by using SLE initiates a disconnection command to disconnect a control channel is similar to that in FIG. 8, and it needs only to exchange the G node device and the T node device in FIG. 8.

FIG. 8 is a schematic flowchart of a control channel disconnection method 800 according to an embodiment of this application.

S811: A basic application layer of the G node device sends an instruction of a user operation to a channel management module. For example, the user operation may be an operation of tapping "disconnect" in a user interface by a user.

S812: The channel management module of the G node device sends a disconnection (disconnect) instruction to a controller according to the instruction of the user operation.

The controller disconnects, according to the disconnection instruction, an established logical channel to release a control channel. If a dedicated link exists, the dedicated link needs to be disconnected first, and then the logical channel is disconnected. The dedicated link refers to a link that needs to be established by the controller based on the logical channel in some service scenarios (for example, a high-definition call scenario). For SLE, the dedicated link is an isochronous connection-oriented one-to-one bidirectional link (isochronous connection-oriented one-to-one bidirectional link, IOB). For SLB, the dedicated link is a dedicated logical channel (logic channel, LC). Therefore, when the logical channel is disconnected, a link established based on the logical channel needs to be disconnected first, and then the logical channel is disconnected. In this way, the logical channel in the controller is disconnected, and the control channel cannot be used. Therefore, the control channel is disconnected.

S813: The controller of the G node device sends a command status (command status) to the channel management module, to indicate that the controller receives the disconnection instruction.

S814: The controller of the G node device sends a disconnection request to a T node device according to the disconnection instruction.

A controller of the T node device disconnects, based on the disconnection request, the established logical channel to release the control channel. For specific descriptions, refer to the related descriptions of S812. Details are not described again.

S815: The controller of the T node device sends response information to the G node device, to indicate that the controller of the T node device completes disconnection of the logical channel.

S816: The controller of the G node device sends, to a basic application layer through the channel management module, an instruction indicating disconnection completion, to notify the user of a disconnected state of the device by using the basic application layer. For example, the basic application layer may send the instruction to an application, to display the disconnected state of the device in a user interface. For example, the basic application layer may send the instruction to a playing device, to indicate the disconnected state by using the playing device. For example, the playing device gives a prompt tone of "di" or "disconnect".

S817: The controller of the T node device sends, to a basic application layer through the channel management module, an instruction indicating disconnection completion, to notify the user of a disconnected state of the device by using the basic application layer.

In some other embodiments, for SLE, after one of two electronic devices sends a request response to the other in a connection establishment process (for example, the first electronic device sends the first request response to the second electronic device in S427), a connection between the two parties is in an unstable state. After preset duration (for example, after N superframe periods), if the G node device does not receive a T frame sent by the T node device, it is considered that connection between the two parties fails/is disconnected, the G node device no longer sends a C frame to the T node device. If there is an access requirement, the electronic device needs to restart an access process, and perform the method 400 or the method 600.

In some other embodiments, for SLB, after a quantity of data retransmission times at a control link layer of SLB exceeds a maximum quantity of times, it is considered that connection between two parties fails/is disconnected. If there is an access requirement, the electronic device needs to restart an access process, and perform the method 500 or the method 700.

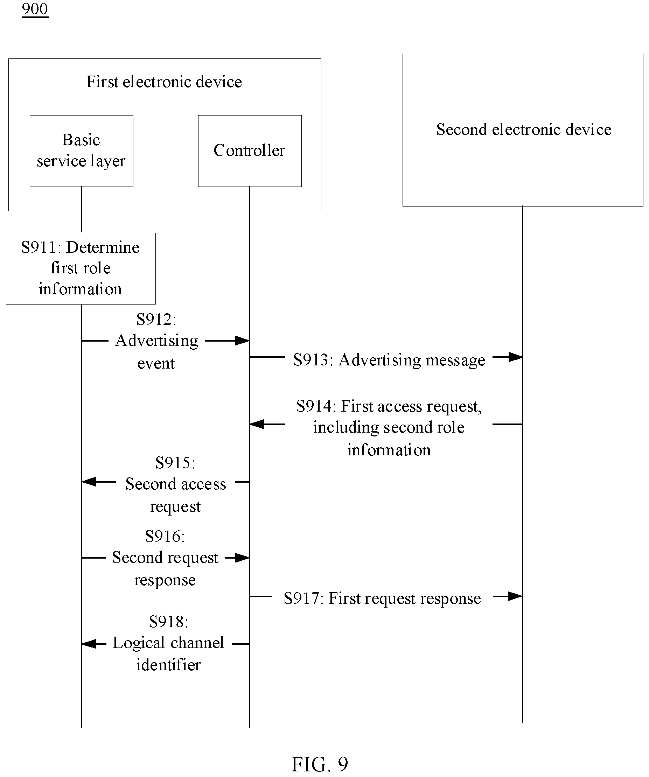

FIG. 9 is a schematic flowchart of a device connection method 900 according to an embodiment of this application. The method 900 is performed by a first electronic device, the first electronic device supports a short-range access technology, and a connection between the first electronic device and a second electronic device is implemented by establishing a control channel. The first electronic device includes a basic service layer and a controller, and the basic service layer includes a device discovery module and a channel management module. Optionally, the first electronic device further includes a basic application layer (not shown in the figure).

S911: The basic service layer determines first role information, where the first role information indicates an expected role of the first electronic device, and the expected role of the first electronic device is a main control node device or a terminal node device.

Specifically, the device discovery module at the basic service layer determines the first role information. The first role information is the foregoing role information of the first electronic device. For specific descriptions of the first role information, refer to the related descriptions of S411.

In some embodiments, the device discovery module receives a notification event from the basic application layer, and the notification event is used to determine the first role information. The device discovery module determines the first role information based on the notification event. In an example, the notification event includes information about an operation performed by a user on the first electronic device. In another example, the notification event includes information indicating that the access technology is SLE. In another example, the notification event includes the role information of the first electronic device. For specific descriptions of the notification event, refer to the related descriptions of S411. Details are not described again.

In some embodiments, the device discovery module sends the determined first role information to the channel management module, so that the channel management module determines the first role information, and the channel management module subsequently establishes a control channel. For example, as shown in S413, the device discovery module sends first information to the channel management module, where the first information includes the first role information. For specific descriptions, refer to the related descriptions of S413. Details are not described again.

S912: The basic service layer sends an advertising event to the controller, where the advertising event indicates an advertising policy.

Correspondingly, the controller receives the advertising event.

Specifically, the device discovery module at the basic service layer sends the advertising event to the controller. The advertising event includes a parameter for advertising, including but not limited to: an advertising mode (adv mode), a discovery level, an advertising interval, advertising duration, or an advertising flag (adv flag). For specific descriptions, refer to the related descriptions of S412. Details are not described herein again.

S913: The controller sends an advertising message based on the advertising event, where the advertising message includes address information of the first electronic device.

Correspondingly, the second electronic device receives the advertising message.

For example, the advertising message may further include information such as the advertising mode (adv mode) or the advertising flag (adv flag). For specific descriptions of the advertising message, refer to the related descriptions of S414. Details are not described again.

S915: The controller sends a second access request to the basic service layer based on a received first access request of a second electronic device in response to the advertising message, where the first access request and the second access request are used to request the first electronic device to access the second electronic device, the first access request and the second access request include second role information indicating an expected role of the second electronic device, and the expected role of the second electronic device is a main control node device or a terminal node device.

The second role information herein is the foregoing role information of the second electronic device.

Specifically, in S914, the second electronic device sends the first access request to the first electronic device in response to the advertising message. Correspondingly, the controller of the second electronic device receives the first access request. In S915, the controller of the first electronic device sends the second access request to the channel management module at the basic service layer based on the first access request. For specific descriptions, refer to the related descriptions of S420 and S421. Details are not described again.

S917: The controller sends a first request response based on a received second request response sent by the basic service layer in response to the second access request, where the first request response and the second request response indicate that access of the first electronic device to the second electronic device is agreed, a final role of the first electronic device is different from a final role of the second electronic device, and the final role of the first electronic device and the final role of the second electronic device are determined based on the expected role of the first electronic device and the expected role of the second electronic device.

Specifically, in S916, the channel management module at the basic service layer sends the second request response to the controller in response to the second access request. In S917, the controller sends the first request response based on the second request response. For specific descriptions, refer to the related descriptions of S426 and S427. Details are not described again.

S918: The controller establishes a logical channel, and sends a logical channel identifier for identifying the logical channel to the basic service layer, to establish a control channel corresponding to the logical channel at the basic service layer.

Specifically, when the first request response and the second request response indicate that access of the first electronic device to the second electronic device is agreed, the controller establishes the basic logical channel, and sends the logical channel identifier (LCID) to the channel management module at the basic service layer, to establish the control channel. For specific descriptions, refer to the related descriptions of S428. Details are not described herein again.

As described above, a control channel is a channel designed at the basic service layer. A corresponding control channel can be used only after a logical channel is established. In this way, after the logical channel of the first electronic device is established, the channel management module may determine, based on the LCID, the control channel corresponding to the LCID, to use the corresponding control channel, thereby completing establishment of the control channel.

According to the device connection method provided in this embodiment of this application, for a next-generation short-range access technology (for example, SLE), the controller and the upper basic service layer are disposed in the first electronic device, and the basic service layer triggers establishment of the control channel. To be specific, the basic service layer triggers establishment of the control channel by determining the first role information and sending the advertising event.

The basic service layer, the controller, and a peer device (for example, the second electronic device) establish the logical channel by exchanging information such as an access request (for example, the first access request and the second access request) and an access response (for example, the first request response and the second request response), to establish the control channel, thereby implementing a connection between the first electronic device and the peer device, and providing a basis for subsequent data transmission. In addition, in the short-range access technology provided in this application, because final roles of the first electronic device and the peer device may be determined based on expected roles of the two parties, the roles of the two parties can be flexible and changeable based on an actual scenario, and communication flexibility is high. This is very applicable to a product having flexibility and a miniaturization feature and a service having a small bandwidth, low power consumption, and a low rate, and can be better applicable to a multi-device connection scenario (that is, one electronic device may be connected to a plurality of devices at the same time and a role is not fixed). In conclusion, an application range is large.

Optionally, the advertising event includes the first role information, and the advertising message includes the first role information.

According to the device connection method provided in this embodiment of this application, the first role information is carried in the advertising message, so that the peer device (for example, the second electronic device) can determine a role of the peer device based on the first role information, and the peer device can match, as far as possible in an initial phase of a connection process, an expected role different from the expected role of the first electronic device, thereby improving connection efficiency.

Optionally, before the controller sends a first request response based on a received second request response sent by the basic service layer in response to the second access request, the method further includes:
the basic service layer determines the final role of the first electronic device and the final role of the second electronic device based on the first role information and the second role information in response to the second access request; and
the basic service layer sends the second request response to the controller.

Specifically, in response to the second access request, the channel management module at the basic service layer determines the final role of the first electronic device and the final role of the second electronic device based on the first role information and the second role information, and the channel management module sends the second request response to the controller.

According to the device connection method provided in this embodiment of this application, the first electronic device finally determines the final roles of the first electronic device and the second electronic device based on the expected roles of the first electronic device and the second electronic device, and may perform final control on the roles of the two parties, so that the final roles of the two parties are different, to successfully establish the control channel, thereby implementing a connection between the devices.

When access of the first electronic device to the second electronic device is agreed, embodiments of this application provide the following embodiments for determining the final roles of the two parties.

In some embodiments, the expected role of the first electronic device is the same as the expected role of the second electronic device, and the first role information further indicates that the expected role of the first electronic device is negotiable.

That the basic service layer determines the final role of the first electronic device based on the first role information and the second role information in response to the second access request includes:
the basic service layer changes the expected role of the first electronic device, determines a changed expected role of the first electronic device as the final role of the first electronic device, and determines the expected role of the second electronic device as the final role of the second electronic device.

Specifically, when the expected roles of the two parties are the same and the expected role of the first electronic device is negotiable, the channel management module at the basic service layer changes the expected role of the first electronic device, so that the final roles of the two parties are different. It should be understood that, in this embodiment, the expected role of the second electronic device may be negotiable or non-negotiable, provided that the expected role of the first electronic device is negotiable.

This process may be corresponding to cases 2-1 and 2-2 in S422. For specific descriptions, refer to the foregoing descriptions. Details are not described again.

In some other embodiments, the expected role of the first electronic device is different from the expected role of the second electronic device.

That the basic service layer determines the final role of the first electronic device based on the first role information and the second role information in response to the second access request includes:
the basic service layer determines the expected role of the first electronic device as the final role of the first electronic device, and determines the expected role of the second electronic device as the final role of the second electronic device.

Specifically, when the expected roles of the two parties are different, the channel management module at the basic service layer determines the expected roles of the two parties as the final roles of the two parties.

This process may be corresponding to case 1 in S422. For specific descriptions, refer to the foregoing descriptions. Details are not described again.

Optionally, the first electronic device further includes a basic application layer.

After the controller sends a second access request to the basic service layer based on a received first access request of a second electronic device in response to the advertising message, the method further includes:
the basic service layer sends a third access request to the basic application layer based on the second access request, where the third access request is used to request the first electronic device to access the second electronic device; and
the basic application layer sends a third request response to the basic service layer in response to the third access request when at least one of the following items is met, where the third request response indicates that access of the first electronic device to the second electronic device is agreed, and the at least one item includes: a quantity of electronic devices that can be currently connected to the first electronic device is greater than or equal to 1, or a confirmation operation of a user for a receiving request displayed by the first electronic device is detected.

That the basic service layer sends the second request response to the controller includes:
the basic service layer sends the second request response to the controller based on the third request response.

This process may be performed by the basic application layer and the basic service layer.

Specifically, the channel management module at the basic service layer sends the third access request to the basic application layer based on the second access request. The basic application layer sends the third request response to the channel management module at the basic service layer in response to the third access request when at least one of the following is met. The channel management module sends the second request response to the controller based on the third request response.

This process may be corresponding to S423 and S424. For specific descriptions, refer to the foregoing descriptions. Details are not described again.

According to the device connection method provided in this embodiment of this application, the basic application layer performs capability determining on the first electronic device based on the third access request of the basic service layer, that is, determines, from an application perspective based on the quantity of electronic devices that can be currently connected to the first electronic device and the confirmation operation of the user for the receiving request displayed by the first electronic device, whether to agree access to the second electronic device. This considers more actual application scenarios, and is more conducive to improving a device connection success rate.

Optionally, the advertising event further includes first device filtering information, and the first device filtering information indicates that the first electronic device is allowed to access a device within or outside a whitelist of the first electronic device.

A device in the whitelist of the first electronic device is a device that was connected to the first electronic device.

In other words, the first filtering information allows the first electronic device to access all devices that request to access the first electronic device, not only the device in the whitelist. In this way, an initial connection process between the first electronic device and a new electronic device (for example, the second electronic device) can be implemented. The first filtering information herein may correspond to the device filtering information carried in the advertising event in S412.

According to the device connection method provided in this embodiment of this application, although the whitelist is stored in the first electronic device, the first electronic device is not limited to connecting to a device in the whitelist, and also wants to establish a connection to a new electronic device that has not been connected to the first electronic device. Therefore, the first device filtering information indicating that the first electronic device is allowed to access a device within or outside the whitelist of the first electronic device is carried in the advertising event, so that the controller can subsequently receive and forward an access request from a device outside the whitelist, to implement the initial connection between the first electronic device and the new electronic device.

Optionally, the first access request further includes address information of the second electronic device; and the method further includes:
the controller adds an address indicated by the address information of the second electronic device to the whitelist of the first electronic device, to update the whitelist of the first electronic device.

This process may be corresponding to S434. For specific descriptions, refer to the foregoing related descriptions. Details are not described again.

According to the device connection method provided in this embodiment of this application, in a process of establishing a connection to a new electronic device (for example, the second electronic device), the first electronic device adds an address of the new electronic device to the whitelist of the first electronic device to update the whitelist, so that automatic connection can be implemented in a subsequent process of re-connection between the two parties. This is quick and convenient, and user experience is good.

Optionally, the advertising event further includes second device filtering information, and the second device filtering information indicates that the first electronic device is allowed to access only a device within a whitelist of the first electronic device.

The second device filtering information herein may correspond to the device filtering information in the advertising event in S612.

According to the device connection method provided in this embodiment of this application, the second device filtering information indicating that the first electronic device is allowed to access only a device in the whitelist of the first electronic device is carried in the advertising event, so that the controller can subsequently receive and forward an access request from a device in the whitelist, to implement an automatic connection process between the first electronic device and an electronic device (for example, the second electronic device) that was connected to the first electronic device.

Optionally, the advertising message further includes address information of the second electronic device, and the second electronic device is a device within the whitelist of the first electronic device.

According to the device connection method provided in this embodiment of this application, address information of a device (for example, the second electronic device) in the whitelist is carried in the advertising message, so that an automatic connection between the first electronic device and a specific device can be implemented.

Optionally, the method further includes: The basic service layer sends, to the basic application layer, information indicating that the control channel is available.

Specifically, the channel management module at the basic service layer sends, to the basic application layer, the information indicating that the control channel is available.

According to the device connection method provided in this embodiment of this application, the basic service layer sends, to the basic application layer, the information indicating that the control channel is available, so that the basic application layer can determine that the control channel is successfully established, and can initiate subsequent service channel establishment and data transmission.

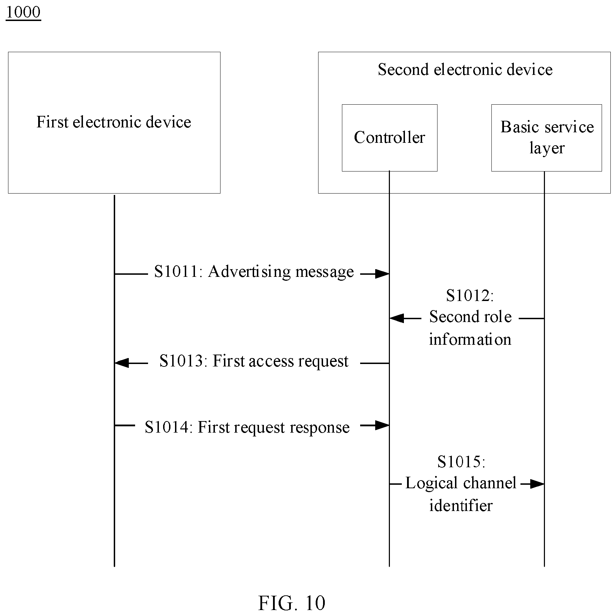

FIG. 10 is a schematic flowchart of a device connection method 1000 according to an embodiment of this application. The method 1000 is performed by a second electronic device, the second electronic device supports a short-range access technology, and a connection between a first electronic device and the second electronic device is implemented by establishing a control channel. The second electronic device includes a basic service layer and a controller, and the basic service layer includes a device discovery module and a channel management module. Optionally, the second electronic device further includes a basic application layer (not shown in the figure).

S1011: The controller receives an advertising message from a first electronic device, where the advertising message includes address information of the first electronic device.

S1012: The basic service layer sends second role information to the controller, where the second role information indicates an expected role of the second electronic device, and the expected role of the second electronic device is a main control node device or a terminal node device.

Specifically, the channel management module or the device discovery module at the basic service layer sends the second role information to the controller.

In an automatic connection scenario, the second role information may be carried, as a connection parameter, in connection information sent by the device discovery module. For specific descriptions, refer to the descriptions of S616.

In a scenario of initial connection, the second role information may be carried in access information used by the channel management module to trigger the controller to send the first access request. For specific descriptions, refer to the descriptions of S419.

S1013: The controller sends a first access request to the first electronic device in response to the advertising message, where the first access request is used to request the first electronic device to access the second electronic device, and the first access request includes the second role information and the address information of the first electronic device.

S1014: The controller receives a first request response of the first electronic device in response to the first access request, where the first request response indicates that access of the first electronic device to the second electronic device is agreed, a final role of the first electronic device is different from a final role of the second electronic device, the final role of the first electronic device and the final role of the second electronic device are determined based on an expected role of the first electronic device and the expected role of the second electronic device, and the expected role of the first electronic device is a main control node device or a terminal node device.

S1015: The controller establishes a logical channel, and sends a logical channel identifier for identifying the logical channel to the basic service layer, to establish a control channel corresponding to the logical channel at the basic service layer.

Specifically, when the first request response indicates that access of the first electronic device to the second electronic device is agreed, the controller establishes the basic logical channel, and sends the logical channel identifier (LCID) to the channel management module at the basic service layer, to establish the control channel. For specific descriptions, refer to the related descriptions of S429. Details are not described herein again.

As described above, a control channel is a channel designed at the basic service layer. A corresponding control channel can be used only after a logical channel is established. In this way, after the logical channel of the second electronic device is established, the channel management module may determine, based on the LCID, the control channel corresponding to the LCID, to use the corresponding control channel, thereby completing establishment of the control channel of the second electronic device.

According to the device connection method provided in this embodiment of this application, for a next-generation short-range access technology (for example, SLE), the controller and the upper basic service layer are disposed in the second electronic device. The second electronic device initiates the first access request to the controller based on the advertising message of the first electronic device that is obtained by the controller through scanning and the second role information delivered by the basic service layer, and establishes the logical channel after receiving the first request response, to establish the control channel, thereby implementing a connection between the second electronic device and a peer device, and providing a basis for subsequent data transmission. In addition, in the short-range access technology provided in this application, because final roles of the second electronic device and the peer device may be determined based on expected roles of the two parties, the roles of the two parties can be flexible and changeable based on an actual scenario, and communication flexibility is high. This is very applicable to a product having flexibility and a miniaturization feature and a service having a small bandwidth, low power consumption, and a low rate, and can be better applicable to a multi-device connection scenario (that is, one electronic device may be connected to a plurality of devices at the same time and a role is not fixed). In conclusion, an application range is large.

Optionally, the advertising message includes first role information indicating the expected role of the first electronic device.

In this embodiment of this application, two scenarios are provided: automatic connection and initial connection. In different scenarios, processes of triggering the first access request by the second electronic device are different.

In the automatic connection scenario, optionally, that the controller sends a first access request to the first electronic device in response to the advertising message includes:
the controller sends the first access request to the first electronic device after obtaining the advertising message through scanning, where the first electronic device is a device within a whitelist of the second electronic device.

That is, in the automatic connection scenario, after finding a device in the whitelist through scanning, the controller does not need to report a scanning result to an upper layer, but may directly initiate the first access request.

According to the device connection method provided in this embodiment of this application, all devices in the whitelist are devices that have been previously connected to the second electronic device. Therefore, the controller scans a device based on the whitelist, and may directly initiate an access request after finding a device in the whitelist through scanning. This simplifies a process of reporting a result to an upper layer, and reduces time required for a connection, to implement a quick connection between devices, and improve efficiency of a connection process.

In the automatic connection scenario, optionally, that the basic service layer sends second role information to the controller includes:
the basic service layer sends connection information to the controller, where the connection information includes the second role information.

Specifically, the device discovery module at the basic service layer sends the connection information to the controller, where the connection information includes a connection parameter, and the second role information is used as one connection parameter.

Optionally, the connection information further includes information indicating the controller to enable a whitelist of the second electronic device.

Optionally, the connection information further includes information indicating a connection mode, the connection mode is a single-device connection mode or a multi-device connection mode, the single-device connection mode indicates that the second electronic device can be connected to only one electronic device in a same time period, and the multi-device connection mode indicates that the second electronic device can be connected to a plurality of electronic devices in a same time period.

The foregoing process in which the basic service layer sends the connection information is corresponding to S616. The connection parameter in S616 is the connection parameter in the connection information. For specific descriptions, refer to the foregoing related descriptions.

In the automatic connection scenario, optionally, a connection mode of the second electronic device is a multi-device connection mode. The method further includes: When a preset condition is met, the controller stops scanning; or when a preset condition is not met, the controller continues scanning, where the preset condition includes any one of the following:
a scanning timer of the controller expires;
the first electronic device is an N^{th} device found by the controller through scanning;
the first electronic device is an N^{th} device found by the controller through scanning, and the second electronic device completes establishment of the control channel;
when a scanning timer of the controller does not expire, the first electronic device is an N^{th} device found by the controller through scanning; or
when a scanning timer of the controller does not expire, the first electronic device is an N^{th} device found by the controller through scanning, and the second electronic device completes establishment of the control channel.

N devices that are found by the controller through scanning and that include the first electronic device are devices within the whitelist of the second electronic device, N is a maximum quantity of devices that can be connected to the second electronic device, and N is an integer greater than 1.

This process may be corresponding to S6172 in S617. For specific descriptions, refer to the foregoing related descriptions. Details are not described again.

According to the device connection method provided in this embodiment of this application, in a case that the second electronic device supports the multi-device connection mode, the controller of the second electronic device stops scanning only when the preset condition is met, to stop an entire connection process; otherwise, the controller continues scanning when the preset condition is not met, to implement multi-device connection. In this way, the controller does not need to interact with an upper layer (for example, the basic service layer) (for example, the upper layer delivers connection information, a scanning parameter, and the like) during each time of device connection to initiate an access request, that is, the second electronic device does not need to restart a connection process during each time of device connection, so that not only signaling overheads are effectively reduced, but also a delay in a multi-device connection process is reduced, thereby implementing quick connection between a plurality of devices.

In the automatic connection scenario, optionally, the advertising message further includes address information of the second electronic device.

In the initial connection scenario, optionally, the second electronic device further includes a basic application layer; and the method further includes:
the controller sends, to the basic application layer through the basic service layer, a scanning result determined based on the advertising message, where the scanning result includes the address information of the first electronic device; and
the basic application layer sends second information to the basic service layer, where the second information includes the address information of the first electronic device.

That the basic service layer sends second role information to the controller includes:
the basic service layer sends access information to the controller based on the second information, where the access information includes the second role information and the address information of the first electronic device.

That the controller sends a first access request to the first electronic device in response to the advertising message includes:
the controller sends the first access request based on the access information in response to the advertising message.

Specifically, the controller determines the scanning result based on the advertising message and sends the scanning result to the basic application layer through the device discovery module at the basic service layer (refer to S417). The basic application layer sends the second information to the channel management module at the basic service layer (refer to S418). The channel management module sends the access information to the controller based on the second information (refer to S419). The controller sends the first access request based on the access information in response to the advertising message (refer to S420).

It should be understood that, in this process, the second role information is carried in the access information delivered by the channel management module.

Optionally, the advertising message, the scanning result, and the second information all include the first role information indicating the expected role of the first electronic device.

Before the basic service layer sends access information to the controller based on the second information, the method further includes:
the basic service layer determines the expected role of the second electronic device based on the expected role of the first electronic device, where the expected role of the second electronic device is different from the expected role of the first electronic device.

Specifically, the channel management module at the basic service layer obtains the first role information from the second information delivered by the basic application layer, determines the expected role of the second electronic device based on the first role information, and delivers the expected role to the controller by using the access information.

According to the device connection method provided in this embodiment of this application, the first role information is carried in the advertising message of the first electronic device, so that the second electronic device receiving the advertising message can finally obtain the first role information and determine a role of the second electronic device based on the first role information. In an initial phase of a connection process, a peer device can match, as far as possible, an expected role different from the expected role of the first electronic device, thereby improving connection efficiency.

In the initial connection scenario, optionally, the access information further includes information indicating the second electronic device to ignore a whitelist of the second electronic device.

A device in the whitelist of the second electronic device is a device that was connected to the second electronic device, and indicating the second electronic device to ignore the whitelist of the second electronic device means that the second electronic device may connect to a device outside the whitelist.

According to the device connection method provided in this embodiment of this application, when the second electronic device stores the whitelist, the second electronic device is not limited to connecting to a device in the whitelist, and also wants to establish a connection to a new electronic device that has not been connected to the second electronic device. Therefore, the information indicating to ignore the whitelist of the second electronic device is carried in the access information, to implement the initial connection between devices. In addition, if the whitelist is enabled by the second electronic device before, when the second electronic device is connected to the first electronic device for the first time, if the whitelist of the second electronic device is not ignored, another electronic device that is located around the second electronic device and that was connected to the second electronic device may automatically connect to the second electronic device. Because a quantity of devices that can be connected to the second electronic device is limited, the connection between the first electronic device and the second electronic device is affected. Therefore, based on the information indicating the second electronic device to ignore the whitelist of the second electronic device, the second electronic device does not perform device connection based on the whitelist. This can further ensure a success of the initial connection between the first electronic device and the second electronic device.

Optionally, the second information further indicates the first short-range access technology.

Optionally, the first access request further includes the address information of the second electronic device.

According to the device connection method provided in this embodiment of this application, the address information of the second electronic device is carried in the first access request, so that the first electronic device updates the whitelist of the first electronic device, to well adapt to the initial connection scenario.

Optionally, the basic service layer sends, to the basic application layer, information indicating that the control channel is available.

Specifically, the channel management module at the basic service layer sends, to the basic application layer, the information indicating that the control channel is available.

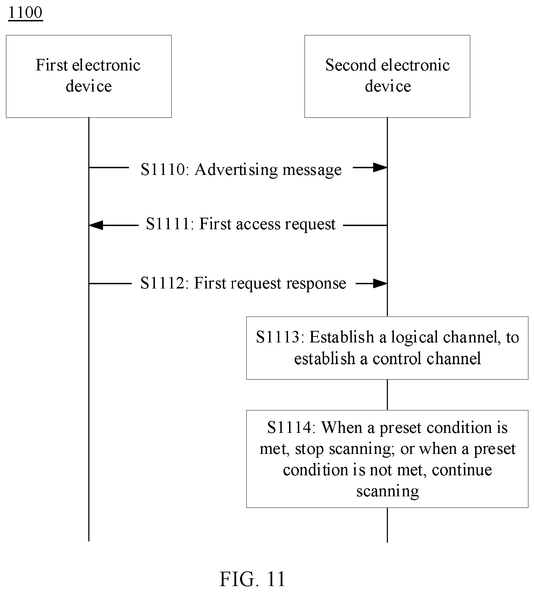

FIG. 11 is a schematic flowchart of a device connection method 1100 according to an embodiment of this application. The method 1100 is performed by a second electronic device, and the second electronic device supports a short-range access technology and multi-device connection. It should be understood that the method 1100 may be applied to any short-range access technology, including but not limited to Wi-Fi, Bluetooth, ZigBee, and SLE and SLB in this application.

S1110: A first electronic device sends an advertising message. For specific descriptions, refer to S614.

S1111: The second electronic device sends a first access request after obtaining the advertising message of the first electronic device through scanning, where the first access request is used to request the first electronic device to access the second electronic device, and the first electronic device is a device within a whitelist of the second electronic device. For specific descriptions, refer to S614 to S618.

S1112: The second electronic device receives a first request response of the first electronic device in response to the first access request, where the first request response indicates that access of the first electronic device to the second electronic device is agreed. For specific descriptions, refer to S625.

S1113: The second electronic device establishes a logical channel, to establish a control channel corresponding to the logical channel. For specific descriptions, refer to S627.

When a preset condition is met, the second electronic device stops scanning; or when a preset condition is not met, the second electronic device continues scanning, where the preset condition includes any one of the following:
a scanning timer of the second electronic device expires;
the first electronic device is an N^{th} device found by the second electronic device through scanning;
the first electronic device is an N^{th} device found by the second electronic device through scanning, and the second electronic device completes establishment of the control channel;
when a scanning timer of the second electronic device does not expire, the first electronic device is an N^{th} device found by the controller through scanning; or
when a scanning timer of the second electronic device does not expire, the first electronic device is an N^{th} device found by the second electronic device through scanning, and the second electronic device completes establishment of the control channel.

N devices that are found by the second electronic device through scanning and that include the first electronic device are devices within the whitelist of the second electronic device, N is a maximum quantity of devices that can be connected to the second electronic device, and N is an integer greater than 1. For specific descriptions, refer to S6172.

According to the device connection method provided in this embodiment of this application, in a case that the second electronic device supports the multi-device connection mode, the second electronic device stops scanning only when the preset condition is met, to stop an entire connection process; otherwise, the second electronic device continues scanning when the preset condition is not met, to implement multi-device connection. In this way, the second electronic device does not need to restart a connection process (for example, an upper layer delivers connection information, a scanning parameter, and the like) during each time of device connection, so that not only signaling overheads are effectively reduced, but also a delay in a multi-device connection process is reduced, thereby implementing quick connection between a plurality of devices.

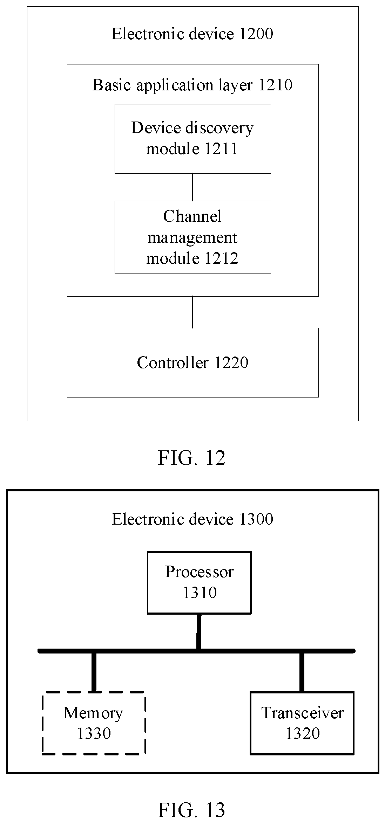

The foregoing describes in detail, with reference to FIG. 1 to FIG. 11, the device connection method provided in embodiments of this application. The following describes in detail, with reference to FIG. 12 and FIG. 13, the electronic device according to embodiments of this application.

FIG. 12 shows an electronic device 1200 according to an embodiment of this application. The electronic device 1200 may be the foregoing first electronic device or second electronic device, or may be a chip in the first electronic device or the second electronic device. The electronic device 1200 supports a short-range access technology, and includes a basic service layer 1210 and a controller 1220. The basic service layer 1210 includes a device discovery module 1211 and a channel management module 1212.

In a possible implementation, the electronic device 1200 is the foregoing first electronic device, and is configured to perform the procedures and steps corresponding to the first electronic device in the foregoing method 400 or 600.

The basic service layer 1210 is configured to determine first role information, where the first role information indicates an expected role of the electronic device, and the expected role of the electronic device is a main control node device or a terminal node device.

The basic service layer 1210 is further configured to send an advertising event to the controller 1220, where the advertising event indicates an advertising policy.

The controller 1220 is configured to send an advertising message based on the advertising event, where the advertising message includes address information of the electronic device.

The controller 1220 is further configured to send a second access request to the basic service layer 1210 based on a received first access request of a second electronic device in response to the advertising message, where the first access request and the second access request are used to request the electronic device to access the second electronic device, the first access request and the second access request include second role information indicating an expected role of the second electronic device, and the expected role of the second electronic device is a main control node device or a terminal node device.

The controller 1220 is further configured to send a first request response based on a received second request response sent by the basic service layer 1210 in response to the second access request, where the first request response and the second request response indicate that access of the electronic device to the second electronic device is agreed, a final role of the electronic device is different from a final role of the second electronic device, and the final role of the electronic device and the final role of the second electronic device are determined based on the expected role of the electronic device and the expected role of the second electronic device.

The controller 1220 is further configured to establish a logical channel, and send a logical channel identifier for identifying the logical channel to the basic service layer 1210, to establish a control channel corresponding to the logical channel at the basic service layer 1210.

Specifically, the device discovery module 1211 at the basic service layer 1210 is configured to determine the first role information, and is further configured to send the first role information to the channel management module 1212, so that the channel management module 1212 subsequently establishes the control channel. The device discovery module 1211 is configured to send the advertising event to the controller 1220. The controller 1220 is configured to receive the first access request, send the second access request, receive the second request response, send the first request response, establish the logical channel, and send the logical channel identifier.

Optionally, the advertising event includes the first role information, and the advertising message includes the first role information.

Optionally, the basic service layer 1210 is further configured to determine the final role of the electronic device and the final role of the second electronic device based on the first role information and the second role information in response to the second access request.

The basic service layer 1210 is further configured to send the second request response to the controller 1220.

Specifically, the channel management module 1212 at the basic service layer 1210 is configured to determine the final roles of the two electronic devices and send the second request response.

In some embodiments, the expected role of the electronic device is the same as the expected role of the second electronic device, and the first role information further indicates that the expected role of the electronic device is negotiable.

The basic service layer 1210 is specifically configured to change the expected role of the electronic device, determine a changed expected role of the electronic device as the final role of the electronic device, and determine the expected role of the second electronic device as the final role of the second electronic device.

In some other embodiments, the expected role of the electronic device is different from the expected role of the second electronic device.

The basic service layer 1210 is specifically configured to determine the expected role of the electronic device as the final role of the electronic device, and determine the expected role of the second electronic device as the final role of the second electronic device.

Optionally, the electronic device further includes a basic application layer.

The basic service layer 1210 is further configured to send a third access request to the basic application layer based on the second access request, where the third access request is used to request the electronic device to access the second electronic device.

The basic application layer is further configured to send a third request response to the basic service layer 1210 in response to the third access request when at least one of the following items is met, where the third request response indicates that access of the electronic device to the second electronic device is agreed, and the at least one item includes: a quantity of electronic devices that can be currently connected to the electronic device is greater than or equal to 1, or a confirmation operation of a user for a receiving request displayed by the electronic device is detected.

The basic service layer 1210 is specifically configured to send the second request response to the controller 1220 based on the third request response.

Specifically, the channel management module 1212 at the basic service layer 1210 is configured to send the third access request to the basic application layer based on the second access request, and send the second request response based on the received third request response of the basic application layer.

Optionally, the advertising event further includes first device filtering information, and the first device filtering information indicates that the electronic device is allowed to access a device within or outside a whitelist of the electronic device.

Optionally, the first access request further includes address information of the second electronic device.

The controller 1220 is further configured to add an address indicated by the address information of the second electronic device to the whitelist of the electronic device, to update the whitelist of the electronic device.

Optionally, the advertising event further includes second device filtering information, and the second device filtering information indicates that the electronic device is allowed to access only a device within a whitelist of the electronic device.

Optionally, the advertising message further includes address information of the second electronic device, and the second electronic device is a device within the whitelist of the electronic device.

Optionally, the basic service layer 1210 is further configured to send, to the basic application layer, information indicating that the control channel is available.

Specifically, the channel management module 1212 at the basic service layer 1210 is configured to send the information.

In another possible implementation, the electronic device 1200 is the foregoing second electronic device, and is configured to perform the procedures and steps corresponding to the second electronic device in the foregoing method 400 or 600.

The controller 1220 is configured to receive an advertising message from a first electronic device, where the advertising message includes address information of the first electronic device.

The basic service layer 1210 is configured to send second role information to the controller 1220, where the second role information indicates an expected role of the electronic device, and the expected role of the electronic device is a main control node device or a terminal node device.

The controller 1220 is further configured to send a first access request to the first electronic device in response to the advertising message, where the first access request is used to request the first electronic device to access the electronic device, and the first access request includes the second role information and the address information of the first electronic device.

The controller 1220 is further configured to receive a first request response of the first electronic device in response to the first access request, where the first request response indicates that access of the first electronic device to the electronic device is agreed, a final role of the first electronic device is different from a final role of the electronic device, the final role of the first electronic device and the final role of the electronic device are determined based on an expected role of the first electronic device and the expected role of the electronic device, and the expected role of the first electronic device is a main control node device or a terminal node device.

The controller 1220 is further configured to establish a logical channel, and send a logical channel identifier for identifying the logical channel to the basic service layer 1210, to establish a control channel corresponding to the logical channel at the basic service layer 1210.

Optionally, the advertising message includes first role information indicating the expected role of the first electronic device.

Optionally, the controller 1220 is specifically configured to send the first access request to the first electronic device after obtaining the advertising message through scanning, where the first electronic device is a device within a whitelist of the electronic device.

Optionally, the basic service layer 1210 is specifically configured to send connection information to the controller 1220, where the connection information includes the second role information, and the connection information further includes information indicating the controller 1220 to enable the whitelist of the electronic device.

Specifically, the device discovery module 1211 at the basic service layer 1210 is configured to send connection information.

Optionally, the connection information further includes information indicating a connection mode, the connection mode is a single-device connection mode or a multi-device connection mode, the single-device connection mode indicates that the electronic device can be connected to only one electronic device in a same time period, and the multi-device connection mode indicates that the electronic device can be connected to a plurality of electronic devices in a same time period.

Optionally, a connection mode of the electronic device is a multi-device connection mode; and the controller 1220 is further configured to: stop scanning when a preset condition is met; or continue scanning when a preset condition is not met, where the preset condition includes any one of the following:
a scanning timer of the controller 1220 expires;
the first electronic device is an N^{th} device found by the controller 1220 through scanning;
the first electronic device is an N^{th} device found by the controller 1220 through scanning, and the electronic device completes establishment of the control channel;
when a scanning timer of the controller 1220 does not expire, the first electronic device is an N^{th} device found by the controller 1220 through scanning; or
when a scanning timer of the controller 1220 does not expire, the first electronic device is an N^{th} device found by the controller 1220 through scanning, and the electronic device completes establishment of the control channel.

N devices that are found by the controller 1220 through scanning and that include the first electronic device are devices within the whitelist of the electronic device, N is a maximum quantity of devices that can be connected to the electronic device, and N is an integer greater than 1.

Optionally, the advertising message further includes address information of the electronic device.

Optionally, the electronic device further includes a basic application layer.

The controller 1220 is further configured to send, to the basic application layer through the basic service layer 1210, a scanning result determined based on the advertising message, where the scanning result includes the address information of the first electronic device.

The basic application layer is further configured to send second information to the basic service layer 1210, where the second information includes the address information of the first electronic device.

The basic service layer 1210 is specifically configured to send access information to the controller 1220 based on the second information, where the access information includes the second role information and the address information of the first electronic device.

The controller 1220 is specifically configured to send the first access request based on the access information in response to the advertising message.

Specifically, the controller 1220 is further configured to send the scanning result, the basic application layer is configured to send the second information to the device discovery module 1211 based on the scanning result, and the channel management module 1212 is configured to send the access information to the controller 1220 based on the second information.

Optionally, the advertising message, the scanning result, and the second information all include the first role information indicating the expected role of the first electronic device.

The basic service layer 1210 is specifically configured to determine the expected role of the electronic device based on the expected role of the first electronic device, where the expected role of the electronic device is different from the expected role of the first electronic device.

The basic service layer 1210 sends the access information to the controller 1220.

Specifically, the channel management module 1212 at the basic service layer 1210 is configured to determine the expected role of the first electronic device, and send the access information.

Optionally, the access information further includes information indicating the electronic device to ignore a whitelist of the electronic device.

Optionally, the second information further indicates the first short-range access technology.

Optionally, the first access request further includes the address information of the electronic device.

Optionally, the basic service layer 1210 is further configured to send, to the basic application layer, information indicating that the control channel is available.

In another possible implementation, the electronic device 1200 is the foregoing second electronic device, supports a multi-device connection mode, and is configured to perform the procedures and steps corresponding to the second electronic device in the foregoing method 1100.

The controller 1220 is configured to send a first access request after obtaining an advertising message of a first electronic device through scanning, where the first access request is used to request the first electronic device to access the electronic device, and the first electronic device is a device within a whitelist of the electronic device.

The controller 1220 is configured to receive a first request response of the first electronic device in response to the first access request, where the first request response indicates that access of the first electronic device to the electronic device is agreed.

The controller 1220 is configured to establish a logical channel, to establish a control channel corresponding to the logical channel.

When a preset condition is met, the controller 1220 is configured to stop scanning; or when a preset condition is not met, the controller 1220 is configured to continue scanning, where the preset condition includes any one of the following:
a scanning timer of the electronic device expires;
the first electronic device is an N^{th} device found by the electronic device through scanning;
the first electronic device is an N^{th} device found by the electronic device through scanning, and the electronic device completes establishment of the control channel;
when a scanning timer of the electronic device does not expire, the first electronic device is an N^{th} device found by the controller 1220 through scanning; or
when a scanning timer of the electronic device does not expire, the first electronic device is an N^{th} device found by the electronic device through scanning, and the electronic device completes establishment of the control channel.

N devices that are found by the electronic device through scanning and that include the first electronic device are devices within the whitelist of the electronic device, N is a maximum quantity of devices that can be connected to the electronic device, and N is an integer greater than 1.

It should be understood that a specific process in which the units perform the corresponding steps in the foregoing methods is described in detail in the foregoing method embodiments. For brevity, details are not described herein.

FIG. 13 shows an electronic device 1300 according to an embodiment of this application. It should be understood that the electronic device 1300 may be specifically the first electronic device or the second electronic device in the foregoing embodiments, and may be configured to perform steps and/or procedures corresponding to the first electronic device or the second electronic device in the foregoing method embodiments.

The electronic device 1300 includes a processor 1310, a transceiver 1320, and a memory 1330. The processor 1310, the transceiver 1320, and the memory 1330 communicate with each other by using an internal connection path. The processor 1310 may implement functions of a basic service layer and a controller in various possible implementations of the electronic device 1200. The transceiver 1320 may implement functions of the basic service layer and the controller in various possible implementations of the electronic device 1200. The memory 1330 is configured to store instructions. The processor 1310 is configured to execute the instructions stored in the memory 1330. In other words, the processor 1310 may invoke these stored instructions to implement functions of the basic service layer and the controller in the electronic device 1200, to control the transceiver 1320 to send a signal and/or receive a signal.

Optionally, the memory 1330 may include a read-only memory and a random access memory, and provides instructions and data for the processor. A part of the memory may further include a non-volatile random access memory. For example, the memory may further store information about a device type. The processor 1310 may be configured to execute the instructions stored in the memory. When the processor 1310 executes the instructions stored in the memory, the processor 1310 is configured to perform the steps and/or procedures in the foregoing method embodiments corresponding to the access network device or the core network device.

A person of ordinary skill in the art may be aware that, in combination with the examples described in embodiments disclosed in this specification, units and algorithm steps may be implemented by electronic hardware or a combination of computer software and electronic hardware. Whether the functions are implemented by hardware or software depends on specific applications and design constraints of the technical solutions.

It should be noted that, in implementations of this application, "protocol" may refer to a standard protocol in the communication field.

It should be further noted that, in embodiments of this application, "predefining" may be implemented by pre-storing, in a device (for example, including a station and an access point), corresponding code or a table, or may be implemented in another manner that may be used for indicating related information. A specific implementation of "predefining" is not limited in this application. For example, predefining may refer to defining in a protocol.

It should be noted that terms "first" and "second" are merely used for description, but should not be understood as indicating or implying relative importance or implying a quantity of indicated technical features. A feature limited by "first" or "second" may explicitly or implicitly include one or more features.

In embodiments of this application, "at least one" refers to one or more, and "a plurality of" refers to two or more. "At least a part of an element" means a part or all of the element. The term "and/or" describes an association relationship of associated objects, and indicates that three relationships may exist. For example, A and/or B may indicate the following three cases: Only A exists, both A and B exist, and only B exists. A and B may be singular or plural. The character "/" generally indicates an "or" relationship between associated objects.

It may be clearly understood by a person skilled in the art that, for convenience and brevity of description, for a specific working process of the foregoing described system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, division into the units is merely logical function division. In actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces, and indirect couplings or communication connections between apparatuses or units may be implemented in an electrical, mechanical, or another form.

The units described as separate parts may or may not be physically separate, and parts displayed as units may or may not be physical units, may be located in one place, or may be distributed on a plurality of network units. Some or all of the units may be selected according to an actual requirement to achieve the objectives of the solutions in the embodiments.

In addition, function units in embodiments of this application may be integrated into one processing unit, or each unit may exist alone physically, or two or more units may be integrated into one unit.

When the function is implemented in a form of a software function unit and sold or used as an independent product, the function may be stored in a computer-readable storage medium. Based on such an understanding, the technical solutions of this application essentially, or the part contributing to the conventional technology, or some of the technical solutions may be implemented in a form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application. However, the protection scope of this application is not limited thereto. Any change or replacement readily figured out by a person skilled in the art within the technical scope disclosed in this application shall fall within the protection scope of this application. Therefore, the protection scope of this application shall be subject to the protection scope of the claims.

## Claims

1. A device connection method, applied to a first electronic device, wherein the first electronic device supports a short-range access technology and comprises a basic service layer and a controller, and the method comprises:
determining (S411), by the basic service layer, first role information, wherein the first role information indicates an expected role of the first electronic device, and the expected role of the first electronic device is: a main control node device, wherein the main control node device is a device configured to control a terminal node device; or a terminal node device, and wherein the first role information further indicates whether the expected role of the first electronic device is negotiable;
sending (S412), by the basic service layer, an advertising event to the controller, wherein the advertising event indicates an advertising policy;
sending (S414), by the controller, an advertising message based on the advertising event to a second electronic device, wherein the advertising message comprises address information of the first electronic device;
receiving (S420), by the controller, a first access request of the second electronic device in response to the advertising message;
sending (S421), by the controller, a second access request to the basic service layer based on the received first access request, wherein the first access request and the second access request are used to request the first electronic device to access the second electronic device, the first access request and the second access request comprise second role information indicating an expected role of the second electronic device, and the expected role of the second electronic device is a main control node device, wherein the main control node device is a device configured to control a terminal node device, or a terminal node device, and wherein the second role information further indicates whether the expected role of the second electronic device is negotiable;
determining (S422), by the basic service layer, final roles of the first electronic device and the second electronic device, wherein:
the final role of the first electronic device is negotiable or non-negotiable;
the final role of the second electronic device is negotiable or non-negotiable;
the final role of the first electronic device is different from a final role of the second electronic device; and
the final role of the first electronic device and the final role of the second electronic device are determined based on:
the expected role of the first electronic device;
the expected role of the second electronic device;
whether the final role of the first electronic device is negotiable or non-negotiable; and
whether the final role of the second electronic device is negotiable or non-negotiable;
wherein if the expected roles of the first and second electronic devices are the same:
if the expected role of the first electronic device is negotiable, and the expected role of the second electronic device is negotiable, the final role of the first electronic device is a changed expected role and the final role of the second electronic device is the expected role;
if the expected role of the first electronic device is negotiable, and the expected role of the second electronic device is non-negotiable, the final role of the first electronic device is a changed expected role, and the final role of the second electronic device is the expected role; and
if both the expected role of the first electronic device and the expected role of the second electronic device are non-negotiable, access fails;
receiving (S426), by the controller, a second response from the basic service layer in response to the second access request;
sending (S427), by the controller, a first response to the second electronic device based on the received second response, wherein the first response and the second response indicate that access of the first electronic device to the second electronic device is agreed; and
establishing (S428), by the controller, a logical channel, and sending a logical channel identifier for identifying the logical channel to the basic service layer, to establish a control channel corresponding to the logical channel at the basic service layer.

2. The method according to claim 1, wherein the advertising event comprises the first role information, and the advertising message comprises the first role information.

3. A device connection method, applied to a second electronic device, wherein the second electronic device supports a short-range access technology and comprises a basic service layer and a controller, and the method comprises:
receiving (S414), by the controller, an advertising message from a first electronic device, wherein the advertising message comprises address information of the first electronic device;
sending (S419), by the basic service layer, second role information to the controller, wherein the second role information indicates an expected role of the second electronic device, and the expected role of the second electronic device is: a main control node device, wherein the main control node device is a device configured to control a terminal node device; or a terminal node device, and wherein the second role information further indicates whether the expected role of the second electronic device is negotiable;
sending (S420), by the controller, a first access request to the first electronic device in response to the advertising message, wherein the first access request is used to request the first electronic device to access the second electronic device, and the first access request comprises the second role information and the address information of the first electronic device;
receiving (S427), by the controller, a first response of the first electronic device in response to the first access request, wherein the first response indicates that access of the first electronic device to the second electronic device is agreed, wherein: the final role of the first electronic device is negotiable or non-negotiable; the final role of the second electronic device is negotiable or non-negotiable; the final role of the first electronic device is different from a final role of the second electronic device; and the final role of the first electronic device and the final role of the second electronic device are determined by the first electronic device based on: the expected role of the first electronic device, wherein the expected role of the first electronic device is a main control node device, wherein the main control node device is a device configured to control a terminal node device, or a terminal node device; the expected role of the second electronic device; whether the final role of the first electronic device is negotiable or non-negotiable; and whether the final role of the second electronic device is negotiable or non-negotiable; wherein if the expected roles of the first and second electronic devices are the same: if the expected role of the first electronic device is negotiable, and the expected role of the second electronic device is negotiable, the final role of the first electronic device is a changed expected role and the final role of the second electronic device is the expected role; if the expected role of the first electronic device is negotiable, and the expected role of the second electronic device is non-negotiable, the final role of the first electronic device is a changed expected role, and the final role of the second electronic device is the expected role; and if both the expected role of the first electronic device and the expected role of the second electronic device are non-negotiable, access fails; and
establishing (S429), by the controller, a logical channel, and sending a logical channel identifier for identifying the logical channel to the basic service layer, to establish a control channel corresponding to the logical channel at the basic service layer.

4. The method according to claim 3, wherein the advertising message comprises first role information indicating the expected role of the first electronic device.

5. The method according to claim 3 or 4, wherein the sending, by the controller, a first access request to the first electronic device in response to the advertising message comprises:
sending, by the controller, the first access request to the first electronic device after obtaining the advertising message through scanning, wherein the first electronic device is a device within a whitelist of the second electronic device.

6. The method according to claim 5, wherein the sending, by the basic service layer, second role information to the controller comprises:
sending, by the basic service layer, connection information to the controller, wherein the connection information comprises the second role information, and the connection information further comprises information indicating the controller to enable the whitelist of the second electronic device.

7. The method according to claim 6, wherein the connection information further comprises information indicating a connection mode, the connection mode is a single-device connection mode or a multi-device connection mode, the single-device connection mode indicates that the second electronic device can be connected to only one electronic device in a same time period, and the multi-device connection mode indicates that the second electronic device can be connected to a plurality of electronic devices in a same time period.

8. An electronic device, comprising:
a memory, configured to store computer instructions; and
a processor, configured to invoke the computer instructions stored in the memory, to perform the method according to any one of claims 1 to 2, or perform the method according to any one of claims 3 to 7.

9. A communication system, comprising:
a first electronic device, configured to perform the method according to any one of claims 1 to 2; and
a second electronic device, configured to perform the method according to any one of claims 3 to 7.

10. A computer-readable storage medium, configured to store computer instructions, wherein the computer instructions are used to implement the method according to any one of claims 1 to 2, or implement the method according to claims 3 to 7.

11. A computer program product, comprising computer instructions, wherein the computer instructions are used to implement the method according to any one of claims 1 to 2, or implement the method according to any one of claims 3 to 7.

12. A chip, wherein the chip comprises:
a memory, configured to store instructions; and
a processor, configured to invoke the instructions from the memory and run the instructions, so that a communication device in which the chip system is installed performs the method according to any one of claims 1 to 2, or performs the method according to any one of claims 3 to 7.

## Patentansprüche

1. Vorrichtungsverbindungsverfahren, das auf eine erste elektronische Vorrichtung angewendet wird, wobei die erste elektronische Vorrichtung eine Nahbereichszugriffstechnologie unterstützt und eine Basisdienstschicht und eine Steuerung umfasst, und das Verfahren Folgendes umfasst:
Bestimmen (S411) erster Rolleninformationen durch die Basisdienstschicht, wobei die ersten Rolleninformationen eine erwartete Rolle der ersten elektronischen Vorrichtung angeben und die erwartete Rolle der ersten elektronischen Vorrichtung Folgende ist: eine Hauptsteuerknotenvorrichtung, wobei die Hauptsteuerknotenvorrichtung eine Vorrichtung ist, die dazu konfiguriert ist, eine Endgeräteknotenvorrichtung zu steuern;
oder eine Endgeräteknotenvorrichtung, und wobei die ersten Rolleninformationen ferner angeben, ob die erwartete Rolle der ersten elektronischen Vorrichtung verhandelbar ist;
Senden (S412) eines Werbeereignisses durch die Basisdienstschicht an die Steuerung, wobei das Werbeereignis eine Werberichtlinie angibt;
Senden (S414) einer Werbenachricht durch die Steuerung basierend auf dem Werbeereignis an eine zweite elektronische Vorrichtung, wobei die Werbenachricht Adressinformationen der ersten elektronischen Vorrichtung umfasst;
Empfangen (S420) einer ersten Zugriffsanforderung der zweiten elektronischen Vorrichtung durch die Steuerung als Reaktion auf die Werbenachricht;
Senden (S421) einer zweiten Zugriffsanforderung durch die Steuerung an die Basisdienstschicht basierend auf der ersten empfangenen Zugriffsanforderung, wobei die erste Zugriffsanforderung und die zweite Zugriffsanforderung verwendet werden, um die erste elektronische Vorrichtung aufzufordern, auf die zweite elektronische Vorrichtung zuzugreifen, die erste Zugriffsanforderung und die zweite Zugriffsanforderung zweite Rolleninformationen umfassen, die eine erwartete Rolle der zweiten elektronischen Vorrichtung angeben, und die erwartete Rolle der zweiten elektronischen Vorrichtung eine Hauptsteuerknotenvorrichtung ist, wobei die Hauptsteuerknotenvorrichtung eine Vorrichtung ist, die dazu konfiguriert ist, eine Endgeräteknotenvorrichtung zu steuern, oder eine Endgeräteknotenvorrichtung, und wobei die zweiten Rolleninformationen ferner angeben, ob die erwartete Rolle der zweiten elektronischen Vorrichtung verhandelbar ist;
Bestimmen (S422) der endgültigen Rollen der ersten elektronischen Vorrichtung und der zweiten elektronischen Vorrichtung durch die Basisdienstschicht, wobei:
die endgültige Rolle der ersten elektronischen Vorrichtung verhandelbar oder nicht verhandelbar ist;
die endgültige Rolle der zweiten elektronischen Vorrichtung verhandelbar oder nicht verhandelbar ist;
sich die endgültige Rolle der ersten elektronischen Vorrichtung von der endgültigen Rolle der zweiten elektronischen Vorrichtung unterscheidet; und
die endgültige Rolle der ersten elektronischen Vorrichtung und die endgültige Rolle der zweiten elektronischen Vorrichtung basierend auf Folgendem bestimmt werden:
der erwarteten Rolle der ersten elektronischen Vorrichtung;
der erwarteten Rolle der zweiten elektronischen Vorrichtung;
ob die endgültige Rolle der ersten elektronischen Vorrichtung verhandelbar oder nicht verhandelbar ist; und
ob die endgültige Rolle der zweiten elektronischen Vorrichtung verhandelbar oder nicht verhandelbar ist;
wobei, sofern die erwarteten Rollen der ersten und der zweiten elektronischen Vorrichtung gleich sind:
sofern die erwartete Rolle der ersten elektronischen Vorrichtung verhandelbar ist und die erwartete Rolle der zweiten elektronischen Vorrichtung verhandelbar ist, die endgültige Rolle der ersten elektronischen Vorrichtung eine geänderte erwartete Rolle ist und die endgültige Rolle der zweiten elektronischen Vorrichtung die erwartete Rolle ist;
sofern die erwartete Rolle der ersten elektronischen Vorrichtung verhandelbar ist und die erwartete Rolle der zweiten elektronischen Vorrichtung nicht verhandelbar ist, die endgültige Rolle der ersten elektronischen Vorrichtung eine geänderte erwartete Rolle ist und die endgültige Rolle der zweiten elektronischen Vorrichtung die erwartete Rolle ist; und
sofern sowohl die erwartete Rolle der ersten elektronischen Vorrichtung als auch die erwartete Rolle der zweiten elektronischen Vorrichtung nicht verhandelbar sind, der Zugriff fehlschlägt;
Empfangen (S426) einer zweiten Antwort von der Basisdienstschicht durch die Steuerung als Reaktion auf die zweite Zugriffsanforderung;
Senden (S427) einer ersten Antwort durch die Steuerung an die zweite elektronische Vorrichtung basierend auf der zweiten empfangenen Antwort, wobei die erste Antwort und die zweite Antwort angeben, dass der Zugriff der ersten elektronischen Vorrichtung auf die zweite elektronische Vorrichtung vereinbart ist; und
Einrichten (S428) eines logischen Kanals durch die Steuerung und Senden einer logischen Kanalkennung zum Identifizieren des logischen Kanals an die Basisdienstschicht, um einen Steuerkanal entsprechend dem logischen Kanal auf der Basisdienstschicht einzurichten.

2. Verfahren nach Anspruch 1, wobei das Werbeereignis die ersten Rolleninformationen umfasst, und die Werbenachricht die ersten Rolleninformationen umfasst.

3. Vorrichtungsverbindungsverfahren, das auf eine zweite elektronische Vorrichtung angewendet wird, wobei die zweite elektronische Vorrichtung eine Nahbereichszugriffstechnologie unterstützt und eine Basisdienstschicht und eine Steuerung umfasst, und das Verfahren Folgendes umfasst:
Empfangen (S414) einer Werbenachricht von einer ersten elektronischen Vorrichtung durch die Steuerung, wobei die Werbenachricht Adressinformationen der ersten elektronischen Vorrichtung umfasst;
Senden (S419) zweiter Rolleninformationen durch die Basisdienstschicht an die Steuerung, wobei die zweiten Rolleninformationen eine erwartete Rolle der zweiten elektronischen Vorrichtung angeben und die erwartete Rolle der zweiten elektronischen Vorrichtung Folgende ist: eine Hauptsteuerknotenvorrichtung, wobei die Hauptsteuerknotenvorrichtung eine Vorrichtung ist, die dazu konfiguriert ist, eine Endgeräteknotenvorrichtung zu steuern;
oder eine Endgeräteknotenvorrichtung, und wobei die zweiten Rolleninformationen ferner angeben, ob die erwartete Rolle der zweiten elektronischen Vorrichtung verhandelbar ist;
Senden (S420) einer ersten Zugriffsanforderung durch die Steuerung an die erste elektronische Vorrichtung als Reaktion auf die Werbenachricht, wobei die erste Zugriffsanforderung verwendet wird, um die erste elektronische Vorrichtung aufzufordern, auf die zweite elektronische Vorrichtung zuzugreifen, und die erste Zugriffsanforderung die zweiten Rolleninformationen und die Adressinformationen der ersten elektronischen Vorrichtung umfasst;
Empfangen (S427) einer ersten Antwort der ersten elektronischen Vorrichtung als Reaktion auf die erste Zugriffsanforderung durch die Steuerung, wobei die erste Antwort angibt, dass der Zugriff der ersten elektronischen Vorrichtung auf die zweite elektronische Vorrichtung vereinbart ist, wobei: die endgültige Rolle der ersten elektronischen Vorrichtung verhandelbar oder nicht verhandelbar ist; die endgültige Rolle der zweiten elektronischen Vorrichtung verhandelbar oder nicht verhandelbar ist; sich die endgültige Rolle der ersten elektronischen Vorrichtung von einer endgültigen Rolle der zweiten elektronischen Vorrichtung unterscheidet; und die endgültige Rolle der ersten elektronischen Vorrichtung und die endgültige Rolle der zweiten elektronischen Vorrichtung durch die erste elektronische Vorrichtung basierend auf Folgendem bestimmt werden: der erwarteten Rolle der ersten elektronischen Vorrichtung, wobei die erwartete Rolle der ersten elektronischen Vorrichtung eine Hauptsteuerknotenvorrichtung ist, wobei die Hauptsteuerknotenvorrichtung eine Vorrichtung ist, die dazu konfiguriert ist, eine Endgeräteknotenvorrichtung zu steuern, oder eine Endgeräteknotenvorrichtung; der erwarteten Rolle der zweiten elektronischen Vorrichtung; ob die endgültige Rolle der ersten elektronischen Vorrichtung verhandelbar oder nicht verhandelbar ist; und ob die endgültige Rolle der zweiten elektronischen Vorrichtung verhandelbar oder nicht verhandelbar ist; wobei, sofern die erwarteten Rollen der ersten und der zweiten elektronischen Vorrichtung gleich sind: sofern die erwartete Rolle der ersten elektronischen Vorrichtung verhandelbar ist und die erwartete Rolle der zweiten elektronischen Vorrichtung verhandelbar ist, die endgültige Rolle der ersten elektronischen Vorrichtung eine geänderte erwartete Rolle ist und die endgültige Rolle der zweiten elektronischen Vorrichtung die erwartete Rolle ist; sofern die erwartete Rolle der ersten elektronischen Vorrichtung verhandelbar ist und die erwartete Rolle der zweiten elektronischen Vorrichtung nicht verhandelbar ist, die endgültige Rolle der ersten elektronischen Vorrichtung eine geänderte erwartete Rolle ist und die endgültige Rolle der zweiten elektronischen Vorrichtung die erwartete Rolle ist; und,
sofern sowohl die erwartete Rolle der ersten elektronischen Vorrichtung als auch die erwartete Rolle der zweiten elektronischen Vorrichtung nicht verhandelbar sind, der Zugriff fehlschlägt; und
Einrichten (S429) eines logischen Kanals durch die Steuerung und Senden einer logischen Kanalkennung zum Identifizieren des logischen Kanals an die Basisdienstschicht, um einen Steuerkanal entsprechend dem logischen Kanal auf der Basisdienstschicht einzurichten.

4. Verfahren nach Anspruch 3, wobei die Werbenachricht erste Rolleninformationen umfasst, welche die erwartete Rolle der ersten elektronischen Vorrichtung angeben.

5. Verfahren nach Anspruch 3 oder 4, wobei das Senden einer ersten Zugriffsanforderung an die erste elektronische Vorrichtung durch die Steuerung als Antwort auf die Werbenachricht Folgendes umfasst:
Senden der ersten Zugriffsanforderung durch die Steuerung an die erste elektronische Vorrichtung nach dem Erlangen der Werbenachricht durch Scannen, wobei die erste elektronische Vorrichtung eine Vorrichtung auf einer Whitelist der zweiten elektronischen Vorrichtung ist.

6. Verfahren nach Anspruch 5, wobei das Senden zweiter Rolleninformationen durch die Basisdienstschicht an die Steuerung Folgendes umfasst:
Senden von Verbindungsinformationen durch die Basisdienstschicht an die Steuerung, wobei die Verbindungsinformationen die zweiten Rolleninformationen umfassen, und die Verbindungsinformationen ferner Informationen umfassen, welche die Steuerung angeben, um die Whitelist der zweiten elektronischen Vorrichtung zu aktivieren.

7. Verfahren nach Anspruch 6, wobei die Verbindungsinformationen ferner Informationen umfassen, die einen Verbindungsmodus angeben, wobei der Verbindungsmodus ein Verbindungsmodus für einzelne Vorrichtungen oder ein Verbindungsmodus für mehrere Vorrichtungen ist, wobei der Verbindungsmodus für einzelne Vorrichtungen angibt, dass die zweite elektronische Vorrichtung in demselben Zeitraum nur mit einer elektronischen Vorrichtung verbunden werden kann, und der Verbindungsmodus für mehrere Vorrichtungen angibt, dass die zweite elektronische in demselben Zeitraum mit einer Vielzahl von elektronischen Vorrichtungen verbunden werden kann.

8. Elektronische Vorrichtung, umfassend:
einen Speicher, der dazu konfiguriert ist, Computeranweisungen zu speichern; und
einen Prozessor, der dazu konfiguriert ist, die Computeranweisungen, die in dem Speicher gespeichert sind, abzurufen, um das Verfahren nach einem der Ansprüche 1 bis 2 durchzuführen oder das Verfahren nach einem der Ansprüche 3 bis 7 durchzuführen.

9. Kommunikationssystem, umfassend:
eine erste elektronische Vorrichtung, die dazu konfiguriert ist, das Verfahren nach einem der Ansprüche 1 bis 2 durchzuführen; und
eine zweite elektronische Vorrichtung, die dazu konfiguriert ist, das Verfahren nach einem der Ansprüche 3 bis 7 durchzuführen.

10. Computerlesbares Speichermedium, das dazu konfiguriert ist, Computeranweisungen zu speichern, wobei die Computeranweisungen verwendet werden, um das Verfahren nach einem der Ansprüche 1 bis 2 zu implementieren oder das Verfahrens nach Anspruch 3 bis 7 zu implementieren.

11. Computerprogrammprodukt, umfassend Computeranweisungen, wobei die Computeranweisungen verwendet werden, um das Verfahren nach einem der Ansprüche 1 bis 2 zu implementieren oder das Verfahren nach einem der Ansprüche 3 bis 7 zu implementieren.

12. Chip, wobei der Chip Folgendes umfasst:
einen Speicher, der dazu konfiguriert ist, Anweisungen zu speichern; und
einen Prozessor, der dazu konfiguriert ist, die Anweisungen aus dem Speicher abzurufen und die Anweisungen auszuführen, sodass eine Kommunikationsvorrichtung, in welcher das Chipsystem installiert ist, das Verfahren nach einem der Ansprüche 1 bis 2 durchführt oder das Verfahren nach einem der Ansprüche 3 bis 7 durchführt.

## Revendications

1. Procédé de connexion de dispositif, appliqué à un premier dispositif électronique, dans lequel le premier dispositif électronique prend en charge une technologie d'accès à courte portée et comprend une couche de service de base et un dispositif de commande, et le procédé comprend :
la détermination (S411), par la couche de service de base, de premières informations de rôle, dans lequel les premières informations de rôle indiquent un rôle attendu du premier dispositif électronique, et le rôle attendu du premier dispositif électronique est : un dispositif de nœud de commande principal, dans lequel le dispositif de nœud de commande principal est un dispositif configuré pour commander un dispositif de nœud terminal ; ou un dispositif de nœud terminal, et dans lequel les premières informations de rôle indiquent également si le rôle attendu du premier dispositif électronique est négociable ;
l'envoi (S412), par la couche de service de base, d'un événement publicitaire au dispositif de commande, dans lequel l'événement publicitaire indique une politique publicitaire ;
l'envoi (S414), par le dispositif de commande, d'un message publicitaire basé sur l'événement publicitaire à un second dispositif électronique, dans lequel le message publicitaire comprend des informations d'adresse du premier dispositif électronique ;
la réception (S420), par le dispositif de commande, d'une première demande d'accès du second dispositif électronique en réponse au message publicitaire ;
l'envoi (S421), par le dispositif de commande, d'une seconde demande d'accès à la couche de service de base sur la base de la première demande d'accès reçue, dans lequel la première demande d'accès et la seconde demande d'accès sont utilisées pour demander au premier dispositif électronique d'accéder au second dispositif électronique, la première demande d'accès et la seconde demande d'accès comprennent des secondes informations de rôle indiquant un rôle attendu du second dispositif électronique, et le rôle attendu du second dispositif électronique est un dispositif de nœud de commande principal, dans lequel le dispositif de nœud de commande principal est un dispositif configuré pour commander un dispositif de nœud terminal, ou un dispositif de nœud terminal, et dans lequel les secondes informations de rôle indiquent également si le rôle attendu du second dispositif électronique est négociable ;
la détermination (S422), par la couche de service de base, des rôles finaux du premier dispositif électronique et du second dispositif électronique, dans lequel :
le rôle final du premier dispositif électronique est négociable ou non négociable ;
le rôle final du second dispositif électronique est négociable ou non négociable ;
le rôle final du premier dispositif électronique est différent d'un rôle final du second dispositif électronique ; et
le rôle final du premier dispositif électronique et le rôle final du second dispositif électronique sont déterminés sur la base:
du rôle attendu du premier dispositif électronique ;
du rôle attendu du second dispositif électronique ;
de la question de savoir si le rôle final du premier dispositif électronique est négociable ou non négociable ; et
de la question de savoir si le rôle final du second dispositif électronique est négociable ou non négociable ;
dans lequel si les rôles attendus des premier et second dispositifs électroniques sont les mêmes :
si le rôle attendu du premier dispositif électronique est négociable, et le rôle attendu du second dispositif électronique est négociable, le rôle final du premier dispositif électronique est un rôle attendu modifié et le rôle final du second dispositif électronique est le rôle attendu ;
si le rôle attendu du premier dispositif électronique est négociable, et le rôle attendu du second dispositif électronique est non négociable, le rôle final du premier dispositif électronique est un rôle attendu modifié et le rôle final du second dispositif électronique est le rôle attendu ; et
si le rôle attendu du premier dispositif électronique et le rôle attendu du second dispositif électronique sont tous les deux non négociables, l'accès échoue ;
la réception (S426), par le dispositif de commande, d'une seconde réponse de la couche de service de base en réponse à la seconde demande d'accès ;
l'envoi (S427), par le dispositif de commande, d'une première réponse au second dispositif électronique sur la base de la seconde réponse reçue, dans lequel la première réponse et la seconde réponse indiquent que l'accès du premier dispositif électronique au second dispositif électronique est accepté ; et
l'établissement (S428), par le dispositif de commande, d'un canal logique, et l'envoi d'un identifiant de canal logique pour identifier le canal logique à la couche de service de base, pour établir un canal de commande correspondant au canal logique au niveau de la couche de service de base.

2. Procédé selon la revendication 1, dans lequel l'événement publicitaire comprend les premières informations de rôle, et le message publicitaire comprend les premières informations de rôle.

3. Procédé de connexion de dispositif, appliqué à un second dispositif électronique, dans lequel le second dispositif électronique prend en charge une technologie d'accès à courte portée et comprend une couche de service de base et un dispositif de commande, et le procédé comprend :
la réception (S414), par le dispositif de commande, d'un message publicitaire provenant d'un premier dispositif électronique, dans lequel le message publicitaire comprend des informations d'adresse du premier dispositif électronique ;
l'envoi (S419), par la couche de service de base, de secondes informations de rôle au dispositif de commande, dans lequel les secondes informations de rôle indiquent un rôle attendu du second dispositif électronique, et le rôle attendu du second dispositif électronique est : un dispositif de nœud de commande principal, dans lequel le dispositif de nœud de commande principal est un dispositif configuré pour commander un dispositif de nœud terminal ; ou un dispositif de nœud terminal, et dans lequel les secondes informations de rôle indiquent également si le rôle attendu du second dispositif électronique est négociable ;
l'envoi (S420), par le dispositif de commande, d'une première demande d'accès au premier dispositif électronique en réponse au message publicitaire, dans lequel la première demande d'accès est utilisée pour demander au premier dispositif électronique d'accéder au second dispositif électronique, et la première demande d'accès comprend les secondes informations de rôle et les informations d'adresse du premier dispositif électronique ;
la réception (S427), par le dispositif de commande, d'une première réponse du premier dispositif électronique en réponse à la première demande d'accès, dans lequel la première réponse indique que l'accès du premier dispositif électronique au second dispositif électronique est convenu, dans lequel : le rôle final du premier dispositif électronique est négociable ou non négociable ; le rôle final du second dispositif électronique est négociable ou non négociable ; le rôle final du premier dispositif électronique est différent d'un rôle final du second dispositif électronique ; et le rôle final du premier dispositif électronique et le rôle final du second dispositif électronique sont déterminés par le premier dispositif électronique sur la base: du rôle attendu du premier dispositif électronique, dans lequel le rôle attendu du premier dispositif électronique est un dispositif de nœud de commande principal, dans lequel le dispositif de nœud de commande principal est un dispositif configuré pour commander un dispositif de nœud terminal, ou un dispositif de nœud terminal ; du rôle attendu du second dispositif électronique ; si le rôle final du premier dispositif électronique est négociable ou non négociable ; et si le rôle final du second dispositif électronique est négociable ou non négociable ; dans lequel si les rôles attendus des premier et second dispositifs électroniques sont les mêmes : si le rôle attendu du premier dispositif électronique est négociable, et le rôle attendu du second dispositif électronique est négociable, le rôle final du premier dispositif électronique est un rôle attendu modifié et le rôle final du second dispositif électronique est le rôle attendu ; si le rôle attendu du premier dispositif électronique est négociable, et le rôle attendu du second dispositif électronique est non négociable, le rôle final du premier dispositif électronique est un rôle attendu modifié, et le rôle final du second dispositif électronique est le rôle attendu ; et si le rôle attendu du premier dispositif électronique et le rôle attendu du second dispositif électronique sont tous les deux non négociables, l'accès échoue ; et
l'établissement (S429), par le dispositif de commande, d'un canal logique, et l'envoi d'un identifiant de canal logique pour identifier le canal logique à la couche de service de base, pour établir un canal de commande correspondant au canal logique au niveau de la couche de service de base.

4. Procédé selon la revendication 3, dans lequel le message publicitaire comprend des premières informations de rôle indiquant le rôle attendu du premier dispositif électronique.

5. Procédé selon la revendication 3 ou 4, dans lequel l'envoi, par le dispositif de commande, d'une première demande d'accès au premier dispositif électronique en réponse au message publicitaire comprend :
l'envoi, par le dispositif de commande, de la première demande d'accès au premier dispositif électronique après obtention du message publicitaire par balayage, dans lequel le premier dispositif électronique est un dispositif figurant dans une liste blanche du second dispositif électronique.

6. Procédé selon la revendication 5, dans lequel l'envoi, par la couche de service de base, de secondes informations de rôle au dispositif de commande comprend :
l'envoi, par la couche de service de base, d'informations de connexion au dispositif de commande, dans lequel les informations de connexion comprennent les secondes informations de rôle, et les informations de connexion comprennent également des informations indiquant au dispositif de commande d'activer la liste blanche du second dispositif électronique.

7. Procédé selon la revendication 6, dans lequel les informations de connexion comprennent également des informations indiquant un mode de connexion, le mode de connexion étant un mode de connexion à dispositif unique ou un mode de connexion à dispositifs multiples, le mode de connexion à dispositif unique indique que le second dispositif électronique peut être connecté à un seul dispositif électronique dans une même période, et le mode de connexion à dispositifs multiples indique que le second dispositif électronique peut être connecté à une pluralité de dispositifs électroniques dans une même période.

8. Dispositif électronique, comprenant :
une mémoire, configurée pour stocker des instructions informatiques ; et
un processeur, configuré pour faire appel aux instructions informatiques stockées dans la mémoire pour réaliser le procédé selon l'une quelconque des revendications 1 à 2, ou réaliser le procédé selon l'une quelconque des revendications 3 à 7.

9. Système de communication, comprenant :
un premier dispositif électronique, configuré pour réaliser le procédé selon l'une quelconque des revendications 1 à 2 ; et
un second dispositif électronique, configuré pour réaliser le procédé selon l'une quelconque des revendications 3 à 7.

10. Support de stockage lisible par ordinateur, configuré pour stocker des instructions informatiques, dans lequel les instructions informatiques sont utilisées pour mettre en œuvre le procédé selon l'une quelconque des revendications 1 à 2, ou mettre en œuvre le procédé selon les revendications 3 à 7.

11. Produit de programme informatique, comprenant des instructions informatiques, dans lequel les instructions informatiques sont utilisées pour mettre en œuvre le procédé selon l'une quelconque des revendications 1 à 2, ou mettre en œuvre le procédé selon l'une quelconque des revendications 3 à 7.

12. Puce, dans laquelle la puce comprend :
une mémoire, configurée pour stocker des instructions ; et
un processeur, configuré pour faire appel aux instructions provenant de la mémoire et exécuter les instructions, de sorte qu'un dispositif de communication dans lequel le système de puce est installé réalise le procédé selon l'une quelconque des revendications 1 à 2, ou réalise le procédé selon l'une quelconque des revendications 3 à 7.
